(19) Europäisches Patentamt
European Patent Office
Office européen des brevets

(11) Publication number: **0 010 420**
**B1**

(12) # EUROPEAN PATENT SPECIFICATION

(45) Date of publication of patent specification: **22.08.84**

(21) Application number: **79302215.3**

(22) Date of filing: **15.10.79**

(51) Int. Cl.³: **C 07 D 417/04,** A 01 N 43/78, A 01 N 43/86 // (C07D417/04, 213/56, 213/59, 277/14, 279/06)

(54) **Pyridyl-substituted thiazolidine and 1,3-thiazine derivatives, processes for their preparation, agricultural compositions containing said derivatives and methods for regulating plant growth and protecting plants from fungi.**

(30) Priority: **16.10.78 US 951708**

(43) Date of publication of application:
**30.04.80 Bulletin 80/09**

(45) Publication of the grant of the patent:
**22.08.84 Bulletin 84/34**

(84) Designated Contracting States:
**DE GB NL SE**

(56) References cited:
**EP-A-0 004 129**
**DE-A-2 729 414**
**US-A-3 574 841**
**US-A-4 080 457**

**Chemical Abstracts, Vol. 85 (1976)**

(73) Proprietor: **ELI LILLY AND COMPANY**
**307, East McCarty Street**
**Indianapolis Indiana 46285 (US)**

(72) Inventor: **Krumkalns, Eriks Victor**
**6333 North Rural**
**Indianapolis, Indiana (US)**

(74) Representative: **McVey, Kenneth William Henry et al**
**Lilly House 13 Hanover Square**
**London W1R 0PA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 010 420 B1

## Description

The field of the invention relates to heterocyclic organic compounds identified as 1-thia-3-aza-4-ones.

In the prior art, Surrey, *J. Am. Chem. Soc. 69,* 2911—2912 (1947); teaches the preparation of 4-thiazolidones by the reaction of thioglycolic acid with Schiff bases. This reference discloses no utilities for the compounds prepared as described therein.

Also in the prior art, Troutman, *et al., J. Am. Chem. Soc. 70,* 3436—3439 (1948), describe methods of synthesizing 2-aryl-3-alkyl- or 2-hetero-3-alkyl-4-thiazolidones, alleged to possess anticonvulsant activity.

Another prior art reference is Pennington *et al., J. Am. Chem. Soc. 75,* 109—114 (1953), which teaches the preparation of 2-substituted-4-thiazolidones, alleged to possess *in vitro* antitubercular activity.

Also in the prior art is Surrey *et al., J. Am. Chem. Soc. 76,* 578—580 (1954), which teaches the preparation of some 2-aryl-4-thiazolidones, alleged to possess significant amoebacidal activity (*Endamoeba criceti*) when tested in hamsters.

Another prior art reference is that of Singh, *J. Indian Chem. Soc.,* 595—597 (1976), which teaches the synthesis of a number of 5-methyl-3-aryl-2-arylimino-4-thiazolidinones, which, together with the acetoxy-mercuri derivatives thereof, are alleged to possess fungicidal activity against *Alternaria solani*, as the test organism.

Yet another prior art reference is Japanese Patent No. 48—17276, which is directed to the manufacture of thiazolidone derivatives bearing a 2-pyridyl moiety in the molecular structure. The compounds are alleged to have central nervous system inhibiting activity.

Still another prior art reference is U.S. Patent No. 4,017,628 (April 12, 1977), which is directed to the treatment of mange using a 2-pyridyl substituted thiazolidinone compound.

Also in the prior art is Jadhav *et al., J. Indian Chem. Soc.,* 424—426 (1978), which teaches the preparation of some 2-methyl-2-(2-hydroxy-4,5-dimethylphenyl)-3-aryl-4-thiazolidinones, alleged to possess fungicidal activity against *Helmynthosporium appatarnae.*

The present invention relates to novel 1-thia-3-aza-4-ones having utility as plant fingicides, terrestrial and aquatic growth regulators, processes for their preparation, methods for the use thereof, and compositions containing the compounds.

This invention relates to compounds of the formula

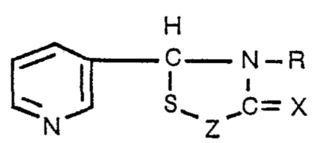

(I)

wherein

R is $C_3$—$C_{10}$ alkyl, $C_3$—$C_8$ cycloalkyl, methallyl, phenyl, halophenyl, trifluoromethylphenyl, benzyl, methoxybenzyl, methylbenzyl, halobenzyl, dimethylaminoethyl, methylcyclohexyl, $C_3$—$C_8$ cycloalkyl-($C_1$—$C_3$)alkyl, $\alpha$-methylbenzyl, 2-thiazolyl, nitrophenyl, phenoxyphenyl, (tetrahydro-2-furanyl)methyl, haloanilyl, trifluoromethylthiophenyl, methylthiophenyl, 2-norbornyl, furfuryl, 2-(1-methoxypropyl), methoxyphenyl, fluoro($C_1$—$C_2$)alkoxyphenyl, 3,4-(methylenedioxy)benzyl, xylyl, biphenylyl, tolyl or halotolyl;

X is oxygen or sulfur;

Z is

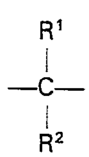 or 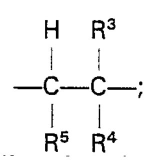;

$R^1$ is hydrogen, methyl, or —S($C_1$—$C_6$ alkyl);

$R^2$ is hydrogen, $C_1$—$C_6$ alkyl, or —S($C_1$—$C_6$ alkyl);

$R^3$ is hydrogen or methyl;

$R^4$ is hydrogen or $C_1$—$C_6$ alkyl; and

$R^5$ is hydrogen or methyl; and provided that when X is oxygen and Z is

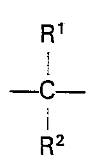

and $R^1$ and $R^2$ are both hydrogen or one of $R^1$ and $R^2$ is hydrogen and the other is methyl; R is not phenyl or halophenyl.

A preferred embodiment of formula (I) is compounds of the formula

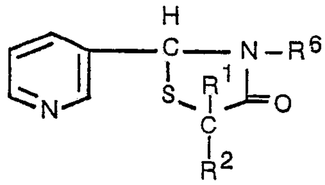

(II)

wherein

$R^1$ is hydrogen, methyl, or —$S(C_1$—$C_6$ alkyl);

$R^2$ is hydrogen, $C_1$—$C_6$ alkyl, or —$S(C_1$—$C_6$ alkyl); and

$R^6$ is $C_3$—$C_{10}$ alkyl, $C_3$—$C_8$ cycloalkyl, methallyl, halophenyl, phenyl, fluoro($C_1$—$C_2$)alkoxyphenyl, nitrophenyl, tolyl, methoxyphenyl, furfuryl, 3,4-(methylenedioxy)benzyl, (tetrahydro-2,-furanyl)methyl, trifluoromethylphenyl, methylcyclohexyl, $C_3$—$C_8$ cycloalkyl ($C_1$—$C_3$)alkyl, biphenylyl, phenoxyphenyl, 2-norbornyl, halobenzyl, 2-thiazolyl, trifluoromethylthiophenyl, halotolyl, or methylthiophenyl; and provided that when $R^1$ and $R^2$ are both hydrogen or one of $R^1$ and $R^2$ is hydrogen and the other is methyl, $R^6$ is not phenyl or halophenyl.

Another preferred embodiment of formula (I) is compounds of the formula

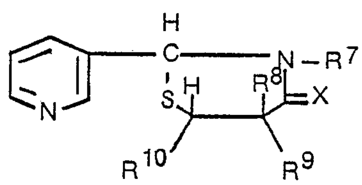

(III)

wherein

X is oxygen or sulfur;

$R^7$ is $C_5$—$C_6$ alkyl, $C_5$—$C_6$ cycloalkyl, halobenzyl, xylyl, halophenyl, methylthiophenyl, tolyl, halotolyl, trifluoromethylphenyl, 1-(2-cyclopentyl-1-methyl)ethyl, or methoxyphenyl;

$R^8$ is hydrogen or methyl; and

$R^9$ and $R^{10}$ are the same or different and are hydrogen or methyl.

The invention includes a process for the preparation of 4-thiazolidinone compounds of the formula

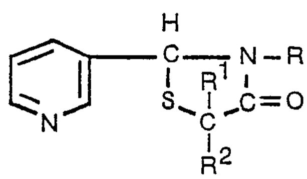

(VII)

wherein:

R, $R^1$ and $R^2$ are defined as for formula (I) provided that when $R^1$ and $R^2$ are both hydrogen or one of $R^1$ and $R^2$ is hydrogen and the other is methyl, R is not phenyl or halophenyl, which comprises reacting 3-pyridylcarboxaldehyde of the formula

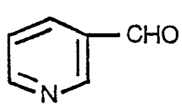

with a substituted amine of the formula

$$R—NH_2$$

wherein R is defined as above, followed by reacting with thioglycolic acid or thiolactic acid.

When $R^1$ or $R^2$ in formula (VII) is hydrogen, the compound can be mono- or di-alkylated to provide the compounds of formula (VII) wherein $R^1$ is methyl or —$S(C_1$—$C_6$ alkyl), or $R^2$ is $C_1$—$C_6$ alkyl or —$S(C_1$—$C_6$ alkyl). Also the 4-keto group of formula (VII) can be further reacted with $P_2S_5$ to provide the corresponding thione. When the R group of the amine is a sterically hindered group, a cyclizing agent such as N,N'-dicyclohexylcarbodiimide or N-ethoxycarbonyl-2-ethoxy-1,2-dihydroquinoline should be used to insure ring closure.

The invention also includes a process for the preparation of thiazinone compounds of the formula

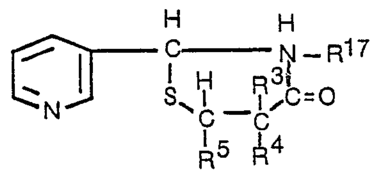

(VIII)

wherein:

$R^3$, $R^4$ and $R^5$ are defined as for formula (I),

$R^{17}$ is $C_3$—$C_{10}$ alkyl, $C_5$—$C_6$ cycloalkyl, $C_3$—$C_8$ cycloalkyl($C_1$—$C_3$)alkyl, halophenyl, trifluoromethylphenyl, halobenzyl, haloanilyl, methoxyphenyl, xylyl, tolyl, or methylthiophenyl, which comprises reacting a compound of the formula

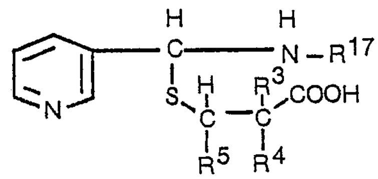

wherein $R^3$, $R^4$, $R^5$ and $R^{17}$ are defined as before, with a cyclizing agent.

When $R^3$ or $R^4$ is hydrogen, or when $R^3$ is methyl and $R^4$ is $C_1$—$C_6$ alkyl and R is hydrogen, the compounds of formula (VIII) can be alkylated to provide the compounds of formula (VIII) where either $R^3$ is methyl or $R^4$ is $C_1$—$C_6$ alkyl, or where $R^3$ is methyl and $R^4$ is $C_1$—$C_6$ alkyl, then $R^5$ is methyl. Also the 4-keto group of formula (VIII) can be further reacted with $P_2S_5$ to provide the corresponding thione.

The invention further includes a composition for use in agriculture which comprises as active ingredient a compound of formula (I) as defined above and an agriculturally acceptable excipient.

This invention relates to a method of protecting plants from phytopathogenic fungi which comprises contacting the fungi with a fungicidally-effective and non-herbicidal amount of a compound of the formula

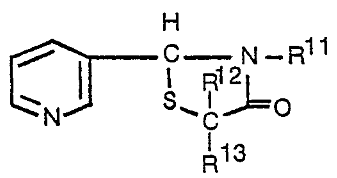

or

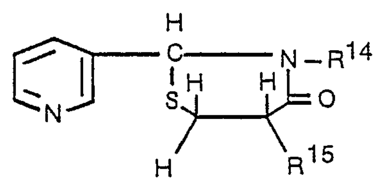

(IV) (V)

wherein

$R^{11}$ is $C_3$—$C_{10}$ alkyl, phenyl, halophenyl, methallyl, $C_3$—$C_8$ cycloalkyl, nitrophenyl, methylcyclohexyl, fluoro($C_1$—$C_2$)alkoxyphenyl, tolyl, xylyl, methoxyphenyl, trifluoromethylphenyl, halotolyl, halobenzyl, 3,4-(methylenedioxy)phenyl, or biphenylyl;

$R^{12}$ is hydrogen or methyl;

$R^{13}$ is hydrogen or $C_1$—$C_6$ alkyl;

$R^{14}$ is $C_3$—$C_6$ alkyl, $C_5$—$C_6$ cycloalkyl, halobenzyl, trifluoromethylphenyl, halophenyl, tolyl, or methoxyphenyl; and

$R^{15}$ is hydrogen or methyl; provided that when $R^{12}$ and $R^{13}$ are both hydrogen or one of $R^{12}$ and $R^{13}$ is hydrogen and the other is methyl, $R^{11}$ is not phenyl or halophenyl.

This invention also relates to a method for regulating the growth of submerged and floating aquatic weeds which comprises adding to the water containing said weeds an amount sufficient to provide a growth-regulating and non-herbicidal concentration of a compound of the formula

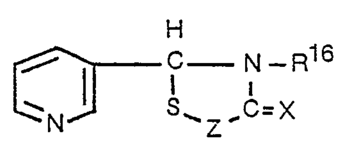

(VI)

wherein

$R^{16}$ is $C_3$—$C_{10}$ alkyl, $C_3$—$C_8$ cycloalkyl, methallyl, phenyl, halophenyl, trifluoromethylphenyl, methoxybenzyl, methylbenzyl, halobenzyl, benzyl, dimethylaminoethyl, $C_3$—$C_8$ cycloalkyl($C_1$—$C_3$)alkyl, methylcyclohexyl, 2-thiazolyl, $\alpha$-methylbenzyl, phenoxyphenyl, (tetrahydro-2-furanyl)methyl, haloanilyl, xylyl, trifluoromethylthiophenyl, methylthiophenyl, methoxyphenyl, fluoro($C_1$—$C_2$)alkoxyphenyl, 3,4-(methylenedioxy)phenyl, biphenylyl, 2-norbornyl, furfuryl, 2-(1-methoxypropyl), halotolyl, or tolyl;

X is oxygen or sulfur;

Z is 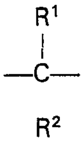 or 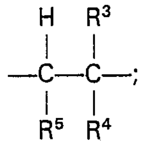;

$R^1$ is hydrogen, methyl, or $—S(C_1—C_6$ alkyl);
$R^2$ is hydrogen, $C_1—C_6$ alkyl, or $—S(C_1—C_6$ alkyl);
$R^3$ is hydrogen or methyl;
$R^4$ is hydrogen or $C_1—C_6$ alkyl; and
$R^5$ is hydrogen or methyl.

The compounds of formula (VI) are also terrestrial growth regulators.

In the above formulae, $C_3—C_{10}$ alkyl represents *n*-propyl, isopropyl, *n*-butyl, *sec*-butyl, isobutyl, *t*-butyl, *n*-pentyl, isopentyl, *sec*-pentyl, *t*-pentyl, *n*-hexyl, *sec*-hexyl, isohexyl, *t*-hexyl, *n*-heptyl, isoheptyl, *sec*-heptyl, *n*-octyl, *sec*-octyl, isooctyl, *n*-nonyl, *sec*-nonyl, isononyl, *n*-decyl or *sec*-decyl.

$C_1—C_6$ alkyl represents methyl, ethyl, *n*-propyl, isopropyl, *n*-butyl, *sec*-butyl, isobutyl, *t*-butyl, *n*-pentyl, isopentyl, *sec*-pentyl, *t*-pentyl, *n*-hexyl, *sec*-hexyl, isohexyl or *t*-hexyl.

The term $—S(C_1—C_6$ alkyl) represents alkylthio such as methylthio, ethylthio, *n*-propylthio, isopropylthio, *n*-butylthio, isobutylthio, *sec*-butylthio, *t*-butylthio, *n*-amylthio, isoamylthio, *sec*-amylthio, *n*-hexylthio, *sec*-hexylthio or isohexylthio.

$C_3—C_8$ Cycloalkyl represents saturated monocyclic cycloalkyl such as cyclopropyl, cyclobutyl, cyclopentyl, cyclohexyl, cycloheptyl, and cyclooctyl.

Halophenyl represents *o*-chlorophenyl, *p*-chlorophenyl, *p*-fluorophenyl, *p*-bromophenyl, *p*-iodophenyl, *m*-chlorophenyl, *o*-bromophenyl, *o*-fluorophenyl, 2,4-difluorophenyl, 2,5-dichlorophenyl, 2,5-dibromophenyl, 2,4-dichlorophenyl, 2-bromo-4-chlorophenyl, 2,4-dibromophenyl, 3,4-difluorophenyl, 4-bromo-2-chlorophenyl, 4-bromo-3-fluorophenyl, 3,4-dichlorophenyl, 3,4-dibromophenyl, 4-chloro-3-fluorophenyl, 3,5-difluorophenyl, 3,5-dichlorophenyl, 3,5-dibromophenyl, 2,3,4-trichlorophenyl, 2,4,5-trichlorophenyl or 2,3,4,5-tetrachlorophenyl.

Halobenzyl represents *o*-chlorobenzyl, *p*-chlorobenzyl, *p*-fluorobenzyl, *p*-bromobenzyl, *p*-iodobenzyl, *m*-chlorobenzyl, *m*-bromobenzyl, *m*-fluorobenzyl, 2,4-dichlorobenzyl, 2-bromo-4-chlorobenzyl, 3,4-dibromobenzyl, 2,5-dichlorobenzyl, 3,5-dibromobenzyl, 4-chloro-3-fluorobenzyl or 2,5-difluorobenzyl.

Haloanilyl represents *p*-chloroanilyl, *o*-chloroanilyl, *m*-chloroanilyl, 2,6-dichloroanilyl, *p*-bromoanilyl or *o*-bromoanilyl.

Fluoro($C_1—C_2$)alkoxyphenyl represents trifluoromethoxyphenyl, 1,1,2,2-tetrafluoroethoxyphenyl and pentafluoroethoxyphenyl.

$C_3—C_8$ Cycloalkyl($C_1—C_3$)alkyl represents cyclopropylmethyl, cyclobutylmethyl, cyclopentylmethyl, cyclohexylmethyl, cyclopropylethyl, cyclobutylethyl, cyclopentylethyl, cyclohexylethyl, cycloheptylethyl, cyclooctylethyl, cycloheptylmethyl, cyclooctylmethyl, cyclopropylpropyl, cyclobutylpropyl, cyclopentylpropyl, cycloheptylpropyl, cyclooctylpropyl, 1-(2-cyclopentyl-1-methyl)ethyl or 1-cyclohexylpropyl.

Methoxyphenyl represents 4-methoxyphenyl, 3,4-dimethoxyphenyl, 3-methoxyphenyl, and 3,5-dimethoxyphenyl.

Halo or halogen is chlorine, bromine, iodine, or fluorine.

Xylyl represents 3,4-dimethylphenyl, 2,3-dimethylphenyl, 3,5-dimethylphenyl, 2,4-dimethylphenyl, and 2,5-dimethylphenyl.

Tolyl represents *o*-, *m*-, and *p*-tolyl.

Compounds of formula (VI) have been found effective for regulating the growth of aquatic weeds when applied to the locus of the weeds at a concentration in the range of from 0.25 to 10 ppm., suitably at a concentration in the range of from about 0.25 to about 2 ppm.

The compounds preferred for use in the novel aquatic growth regulating embodiment are of formula (VI) wherein

R is cyclopentyl, cyclohexyl, 1-methylhexyl, *n*-hexyl, *o*-tolyl, 2-chlorophenyl, 2-fluorophenyl, 2,4-difluorophenyl, 4-chlorophenyl, and 2,4-dichlorophenyl;

Z is 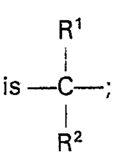;

$R^1$ is hydrogen or methyl; and
$R^2$ is hydrogen, methyl, *n*-propyl, or *n*-butyl.

Another embodiment relates to a method of protecting plants from phytopathogenic fungi which comprises contacting the loci of the fungi, be that some portion of the plant, namely leaves, stems, flowers or roots, or the soil wherein the fungi may be located, with a fungicidally-effective but non-herbicidal amount of a compound of formula (IV) or (V). Application rates will vary according to whether the method of protecting plants from phytopathogenic fungi is practised in a greenhouse or out of doors in the field, as well as with the severity of the fungal infection. Thus, for use in a greenhouse, the fungicidal compound is applied as a soil drench using a composition having a concentration in the range of from about 1 to about 200 ppm. of active ingredient, preferably from 5 to 100 ppm. As is well understood by those of ordinary skill in the art, application rates for use in the field are usually greater than for use in a greenhouse, and range from 25 to 1000 ppm.

Novel compounds of formula (IV) or (V) have been shown by suitable tests to control a number of fungi, including *Erysiphe graminis tritici,* the causative organism of powdery mildew of wheat; *Erysiphe cichoracearum,* the causative organism of cucumber powdery mildew; *Erysiphe polygoni,* the causative organism of bean powdery mildew; *Helminthosporium sativum,* the causative organism of Helminthosporium leaf spot; *Venturia inaequalis,* the causative organism of apple scab; *Plasmopara viticola,* the causative organism of grape downy mildew; *Cercospora beticola,* the causative organism of Cercospora leaf spot; *Septoria tritici,* the causative organism of Septoria leaf blotch; and *Rhizoctonia solani,* the causative organism of Rhizoctonia damping-off.

The compounds preferred for use in the method of protecting plants from plant pathogenic fungi are of formula (IV) or (V) wherein

R is halophenyl, cyclohexyl or tolyl;

Z is 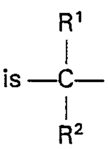 or 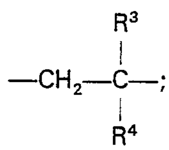

$R^1$ is hydrogen or methyl;

$R^2$ is hydrogen, methyl or propyl;

$R^3$ is hydrogen or methyl; and

$R^4$ is hydrogen or methyl.

The novel compounds of formula (I) are prepared by the following described processes, varying somewhat depending upon whether the particular compound is a thiazolidinone or a thiazinone. Those substituted 1-thia-3-aza-4-one compounds, identified as substituted 4-thiazolidinone compounds, are prepared according to the following general reaction sequence:

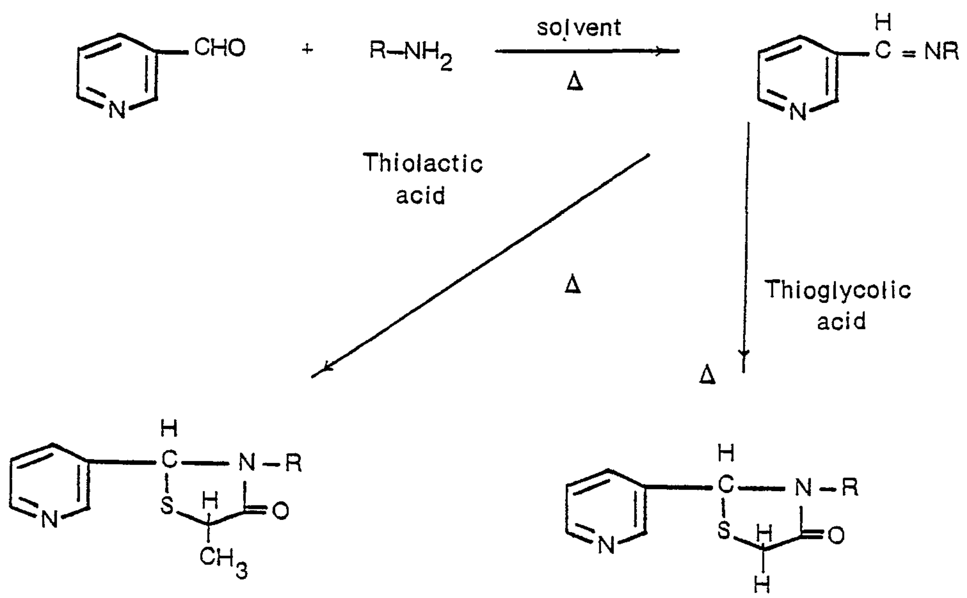


wherein R has the same values as set forth hereinabove.

Thus, in carrying out the reaction, a suitably substituted aniline or alkylamine is dissolved in a water-immiscible solvent inert to the conditions of the reaction to be carried out, and to this solution there is added the 3-pyridylcarboxaldehyde. Suitable solvents include benzene, toluene, xylene, and the like. The mixture is refluxed for a period of time during which water, which is a by-product of the reaction, is collected in a suitable water trap, for instance, the Dean-Stark trap. The intermediate

formed is a 3-[(substituted phenylimino)methyl]pyridine which is usually not isolated. After the calculated amount of water given off by the reaction mixture has been collected, the reaction mixture is cooled to approximately room temperature, an excess of thioglycolic (α-mercaptoacetic acid) or thiolactic acid (2-mercaptopropionic acid) is added, and the reaction mixture again refluxed until no more water is collected in the Dean-Stark trap. This requires approximately 4 hours. The reaction product mixture is cooled, concentrated to dryness *in vacuo,* and purified by recrystallization of the residue from a suitable solvent, or by column chromatography. By this general procedure the 4-thiazolidinones are prepared, which compounds have a 5-membered heterocyclic nucleus.

The process used to prepare the tetrahydro thiazin-4-one compounds, the compounds with a 6-membered heterocyclic nucleus, is carried out stepwise according to the following general reaction sequence:

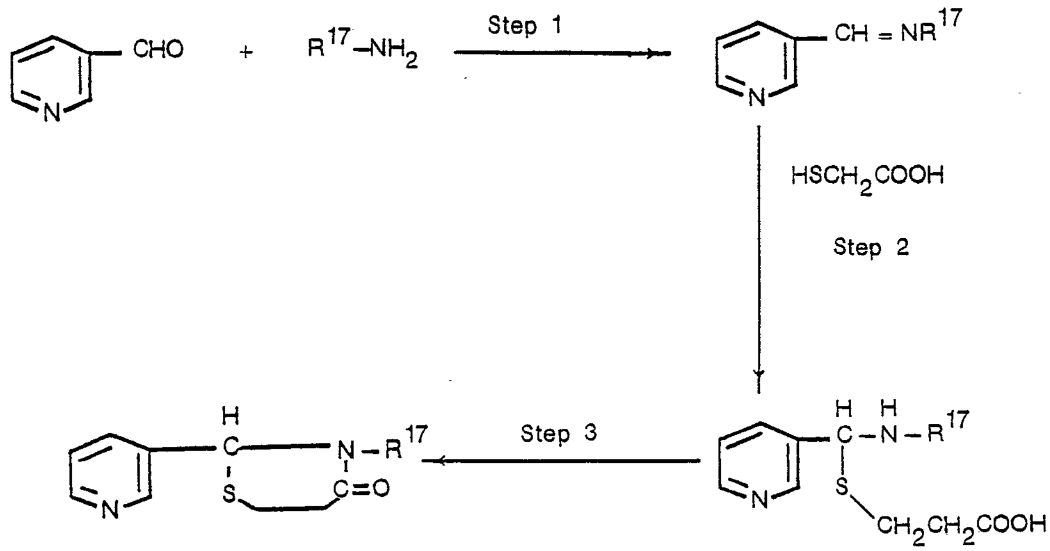


$R^{17}$ has the same values as set forth hereinabove.

In Step 1, a mixture of the 3-pyridylcarboxaldehyde, a suitably substituted amine, and an inert water-immiscible solvent, such as toluene, benzene or xylene, is refluxed under a Dean-Stark trap to collect the water given off by the reaction. The reaction mixture is cooled, filtered, and concentrated *in vacuo*. The residue is purified by crystallization or column chromatography. The product of this step is identified as a 3-[(substituted phenylimino)methyl]pyridine, and is used in Step 2.

The 3-[(substituted phenylimino)methyl]pyridine is mixed with β-mercaptopropionic acid and an inert water-immiscible solvent, such as toluene, benzene, or xylene, and allowed to stand at room temperature overnight, or allowed to reflux for a few hours. The product of this reaction is isolated in crude form by concentrating the reaction mixture *in vacuo.* The crude product, identified as a 3-[α-(substituted anilino)-α-(3-pyridyl)methylthio]propionic acid, is used in Step 3.

The 3-[α-(substituted anilino)-α-(3-pyridyl)methylthio]propionic acid is allowed to react with N,N'-dicyclohexylcarbodiimide in an inert solvent, at room temperature for from about 3 to about 15 hours, or until substantially complete reaction occurs. Another cyclizing agent which can be used in place of N,N'-dicyclohexylcarbodiimide (DCC) is N-ethoxycarbonyl-2-ethoxy-1,2-dihydroquinoline (EEDQ). Other known peptide cyclizing agents can also be used. Suitable inert solvents include methylene chloride, chloroform, carbon tetrachloride, and ethylene dichloride. THe solid which separates is filtered off and discarded. The filtrate is concentrated to dryness *in vacuo* to leave a residue which is purified by usual procedures, such as recrystallization or column chromatography. The product is identified as the desired 3-(substituted phenyl)tetrahydro-2-(3-pyridyl)-4H-1,3-thiazin-4-one.

Those compounds of formula I wherein Z is

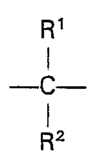

and $R^1$ and/or $R^2$ equal hydrogen; wherein Z is

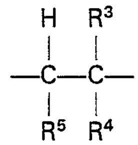

and $R^3 = R^4 = R^5$ = hydrogen; or $R^3$ = methyl and $R^4 = R^5$ = hydrogen, are conveniently alkylated by methods known to those of ordinary skill in the art. The alkylation appears to occur at the position alpha to the carbonyl function of the 4-thiazolidinone or thiazin-4-one ring. Thus, for example, 3-(4-chlorophenyl)-5-methyl-2-(3-pyridyl)-4-thiazolidinone, dissolved in tetrahydrofuran, is added with stirring to a mixture of a hexane solution of *n*-butyllithium and tetrahydrofuran, maintained under an atmosphere of dry nitrogen, and cooled to a temperature of about −50°C. to about −70°C. After stirring the reaction mixture for about one-half hour at about −70°C., methyl iodide is added dropwise, with stirring, and then the reaction mixture is stirred for about 12 hours, and allowed to warm gradually to ambient room temperature. The reaction product mixture is worked up by adding water thereto and extracting with ether. The ether extracts are dried, concentrated *in vacuo*, and the residue recrystallized from a suitable solvent, in the present case a mixture of petroleum ether (BP 60—70°C.) and ethyl ether, to yield product having a melting point of about 140—141°C., and identified as 3-(4-chlorophenyl)-5,5-dimethyl-2-(3-pyridyl)-4-thiazolidinone.

The preparation of those compounds of formula (I) wherein the carbonyl oxygen is replaced by sulfur is carried out by allowing the carbonyl oxygen compound to react with phosphorus pentasulfide ($P_2S_5$) in a suitable solvent, preferably dry pyridine, at a temperature of about 90°C. for a period of about 18 hours, and then isolating the product.

Thus, for example, 3-(4-chlorophenyl)tetrahydro-2-(3-pyridyl)-4H-1,3-thiazin-4-one is mixed with dry pyridine and heated to a temperature of about 90°C., whereby a solution is obtained. To this solution phosphorus pentasulfide is added portionwise, with stirring and heating, and when the addition is complete, the reaction mixture is heated at about 90°C., and stirred overnight, that is, for about 18 hours. The reaction mixture is then cooled and the pyridine solvent evaporated *in vacuo*, leaving a viscous, oily, residue, which is washed by trituration with water. The oil is then taken up in a solvent, in this case a mixture of ethanol and dimethylformamide, decolorized with carbon, filtered, and the ethanol removed *in vacuo*. The dimethylformamide solution is poured slowly into cold water, whereby a solid precipitates. The solid is extracted into ethyl acetate, and the extract washed with cold aqueous sodium chloride solution. The ethyl acetate solution is concentrated *in vacuo* to yield an oil which is chromatographed over a silica gel column using ethyl acetate as solvent and eluant. The viscous oil product obtained is crystallized from a suitable solvent, in this case a mixture of ethyl acetate and ether, and there is obtained product having a melting point of about 115—117°C., identified by elemental analyses as 3-(4-chlorophenyl)tetrahydro-2-(3-pyridyl)-4H-1,3-thiazine-4-thione.

Suitable acid addition salts of the compounds of formula (I) are readily prepared by the usual procedures well-known to those skilled in the art, using acids selected from hydrochloric, hydrobromic, sulfuric and *p*-toluenesulfonic.

It must be noted that compounds of formula (I) occur as stereoisomers when Z is

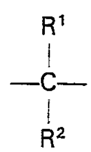

wherein $R^1 \neq R^2$; when Z is

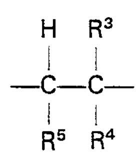

wherein $R^3 \neq R^4$ when $R^5$ = H; and when Z is

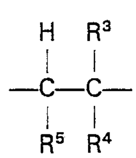

wherein $R^5 \neq$ H when $R^3$ and $R^4$ are both hydrogen or both methyl. Such stereoisomers are capable of

being separated through the application of suitable resolving agents, or chromatography, as is well-recognized by those of ordinary skill in the art.

The synthesis of the compounds of formula (I) is more specifically illustrated following the above general procedures.

Example 1

3-(4-Chlorophenyl)-5-methyl-2-(3-pyridyl)-4-thiazolidinone

In a round bottomed 3-neck flask equipped with a condenser, Dean-Stark trap, and a mechanical stirrer, there was placed 25.4 g. (0.27 mole) of 4-chloroaniline and 250 ml. of toluene. With stirring, there was added to this solution 21.4 g. (0.27 mole) of 3-pyridinecarboxaldehyde, and the reaction mixture refluxed until the calculated amount of water (approximately 3.6 ml.) had been collected in the Dean-Stark trap. The hot reaction mixture was cooled to room temperature and an excess of thiolactic acid, totaling 30 g., was added and the reaction mixture again heated to reflux until no more water was collected in the Dean-Stark trap. This required about 4 hours of heating. The reaction mixture was then cooled and concentrated to dryness *in vacuo*. The solid residue was recrystallized from a mixture of hot ethyl ether and acetone to yield product having a melting point of about 120—122°C., and identified by infrared and NMR spectra, and elemental analyses as 3-(4-chlorophenyl)-5-methyl-2-(3-pyridyl)-4-thiazolidinone. Wt. 7 g.

Analyses calculated for $C_{15}H_{13}ClN_2OS$:

| | Theoretical | Found |
|---|---|---|
| C | 59.11 | 59.23 |
| H | 5.30 | 4.26 |
| N | 9.19 | 9.19 |

Following the general procedure of Example 1, additional compounds were prepared and identified. The compounds, together with the principal starting materials and weights thereof used in the preparations, are listed in the examples set forth hereinafter.

Example 2

3-(2,4-Difluorophenyl)-2-(3-pyridyl)-4-thiazolidinone, having a melting point of about 125—127°C., from 13 g. of 2,4-difluoroaniline, 10 g. of 3-pyridylcarboxaldehyde, and 13 g. of thioglycolic acid. Wt. 15 g.

Analyses calculated for $C_{14}H_{10}F_2N_2OS$:

| | Theoretical | Found |
|---|---|---|
| C | 57.53 | 57.80 |
| H | 3.45 | 3.68 |
| N | 9.58 | 9.61 |

Example 3

3-(2-Fluorophenyl)-2-(3-pyridyl)-4-thiazolidinone, having a melting point of about 142—143°C., from 15 g. of 2-fluoroaniline, 15 g. of 3-pyridylcarboxaldehyde, and 13 g. of thioglycolic acid. Wt. 8 g.

Analyses calculated for $C_{14}H_{11}FN_2OS$:

| | Theoretical | Found |
|---|---|---|
| C | 61.30 | 61.50 |
| H | 4.04 | 4.34 |
| N | 10.21 | 10.07 |

Example 4

3-Nonyl-2-(3-pyridyl)-4-thiazolidinone, having a melting point of about 82—83°C., from 11.2 g. of N-nonylamine, 15 g. of 3-pyridylcarboxaldehyde, and 13 g. of thioglycolic acid. Wt. 2.3 g.

Analyses calculated for $C_{17}H_{26}N_2OS$:

| | Theoretical | Found |
|---|---|---|
| C | 66.62 | 66.38 |
| H | 8.55 | 8.22 |
| N | 9.14 | 8.85 |

Example 5

3-(4-Chlorobenzyl)-2-(3-pyridyl)-4-thiazolidinone, having a melting point of about 134°C., from 15 g. of 4-chlorobenzylamine, 15 g. of 3-pyridylcarboxaldehyde, and 13 g. of thioglycolic acid. Wt. 20 g.

Analyses calculated for $C_{15}H_{13}ClN_2OS$:

| | Theoretical | Found |
|---|---|---|
| C | 59.11 | 58.78 |
| H | 4.30 | 4.42 |
| N | 9.19 | 8.89 |

Example 6

3-Cyclopentyl-2-(3-pyridyl)-4-thiazolidinone, having a melting point of about 118—119°C., from 12 g. of cyclopentylamine, 15 g. of 3-pyridylcarboxaldehyde, and 13 g. of thioglycolic acid. Wt. 6.5 g.

Analyses calculated for $C_{13}H_{16}N_2OS$:

| | Theoretical | Found |
|---|---|---|
| C | 62.87 | 63.01 |
| H | 6.49 | 6.21 |
| N | 11.28 | 11.19 |

Example 7

3-(2-Methallyl)-2-(3-pyridyl)-4-thiazolidinone, having a melting point of about 84°C., from 15 g. of 2-methallylamine, 20 g. of 3-pyridylcarboxaldehyde, and 20 g. of thioglycolic acid. Wt. 23 g.

Analyses calculated for $C_{12}H_{13}N_2OS$:

| | Theoretical | Found |
|---|---|---|
| C | 61.54 | 61.56 |
| H | 5.98 | 5.90 |
| N | 11.97 | 11.70 |

Example 8

3-(1-Methylhexyl)-2-(3-pyridyl)-4-thiazolidinone, having a melting point of about 67°C., from 16 g. of 2-aminoheptane, 15 g. of 3-pyridylcarboxaldehyde, and 13 g. of thioglycolic acid. Wt. 3 g.

Analyses calculated for $C_{15}H_{22}N_2OS$:

| | Theoretical | Found |
|---|---|---|
| C | 64.71 | 64.70 |
| H | 7.97 | 7.76 |
| N | 10.06 | 9.97 |

Example 9

3-(3-Chlorophenyl)-2-(3-pyridyl)-4-thiazolidinone, having a melting point of about 154—155°C., from 13 g. of 3-chloroaniline, 10 g. of 3-pyridylcarboxaldehyde, and 10 g. of thioglycolic acid. Wt. 13 g.

Analyses calculated for $C_{14}H_{11}ClN_2OS$:

| | Theoretical | Found |
|---|---|---|
| C | 57.83 | 57.63 |
| H | 3.81 | 4.07 |
| N | 9.63 | 9.66 |

Example 10

2-(3-Pyridyl)-3-($\alpha$,$\alpha$,$\alpha$-trifluoro-*m*-tolyl)-4-thiazolidinone, as an oil, from 16 g. of 3-trifluoromethylaniline, 15 g. of 3-pyridylcarboxaldehyde, and 13 g. of thioglycolic acid. Wt. 8 g.

NMR ($CDCl_3$) ($\delta$)

3.9 (d, $-CH_2-$) ; 6.3 (s, $-\overset{H}{\underset{S-}{C}}-N$) ; 7.5 (m, phenyl $-CF_3$) ;

8.8 (q, 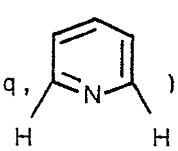 )

Analyses calculated for $C_{15}H_{11}F_3N_2OS$:

| | Theoretical | Found |
|---|---|---|
| C | 55.55 | 55.79 |
| H | 3.42 | 3.56 |
| N | 8.64 | 8.75 |

Example 11

3-(4-Fluorophenyl)-2-(3-pyridyl)-4-thiazolidinone, having a melting point of about 161°C., from 55.5 g. of 4-fluoroaniline, 53.5 g. of 3-pyridylcarboxaldehyde, and 46 g. of thioglycolic acid. Wt. 70 g. Analyses calculated for $C_{14}H_{11}FN_2OS$:

| | Theoretical. | Found |
|---|---|---|
| C | 61.30 | 61.08 |
| H | 4.04 | 4.15 |
| N | 10.21 | 10.17 |

Example 12

3-(Cyclohexylmethyl)-2-(3-pyridyl)-4-thiazolidinone, having a melting point of about 70°C., from 11.3 g. of cyclohexanemethanamine, 10 g. of 3-pyridylcarboxaldehyde, and 10 g. of thioglycolic acid. Wt. 15 g. Identified by NMR spectrum.

Example 13

3-(3,5-Dichlorophenyl)-2-(3-pyridyl)-4-thiazolidinone, having a melting point of about 160—161°C., from 16.2 g. of 3,5-dichloroaniline, 11 g. of 3-pyridylcarboxaldehyde, and 10 g. of thioglycolic acid. Wt. 11 g.

NMR ($CDCl_3$) ($\delta$)

3.9 (d, $-CH_2-$) ; 6.2 (s, 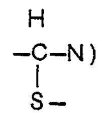) ;

7.2 (q, 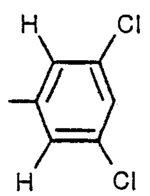) ; 7.6 (q, 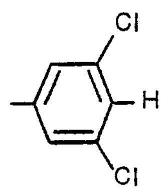) ;

8.8 (d, 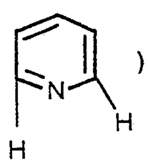).

Example 14

(2-Fluorobenzyl)-2-(3-pyridyl)-4-thiazolidinone, having a melting point of about 103°C., from 12.5 g. of 2-fluorobenzylamine, 10.7 g. of 3-pyridylcarboxaldehyde, and 10 g. of thioglycolic acid. Wt. 6 g.

NMR ($CDCl_3$) ($\delta$)

3.9 (s, $S-CH_2-C(O)$) ;

4.5 (q, 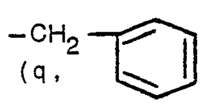) ; 5.5 (s, 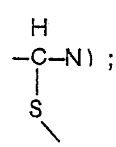) ;

7.2 (m, 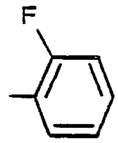 ); 8.8 (m, 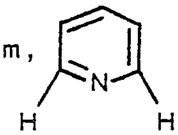 ).

Example 15

3-(3,4-Methylenedioxybenzyl)-2-(3-pyridyl)-4-thiazolidinone, having a melting point of about 121—122°C., from 15.1 g. of piperonylamine, 11 g. of 3-pyridylcarboxaldehyde, and 14 g. of thioglycolic acid. Wt. 4 g.

Analyses calculated for $C_{16}H_{14}N_2O_3S$:

| | Theoretical | Found |
|---|---|---|
| C | 61.13 | 60.95 |
| H | 4.49 | 4.45 |
| N | 8.90 | 8.83 |

Example 16

3-(3,4-Dichlorophenyl)-2-(3-pyridyl)-4-thiazolidinone, having a melting point of about 160—162°C., from 16.2 g. of 3,4-dichloroaniline, 11 g. of 3-pyridylcarboxaldehyde, and 14 g. of thioglycolic acid. Wt. 14 g.

Analyses calculated for $C_{14}H_{10}Cl_2N_2OS$:

| | Theoretical | Found |
|---|---|---|
| C | 51.71 | 51.54 |
| H | 3.10 | 2.96 |
| N | 8.61 | 8.54 |

Example 17

2-(3-Pyridyl)-3-[3-(1,1,2,2-tetrafluoroethoxy)phenyl]-4-thiazolidinone, as an oil, from 21 g. of 3-tetrafluoroethoxyaniline, 11 g. of 3-pyridylcarboxaldehyde, and 14 g. of thioglycolic acid. Wt. 4 g.

NMR ($CDCl_3$) ($\delta$)

3.9 (s, S–$CH_2$–C(O)) ; 6.2 (s, 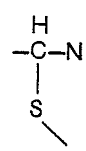 ) ;

7.3 (m, 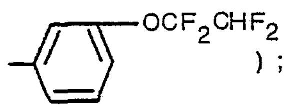 ); 8.8 (m, 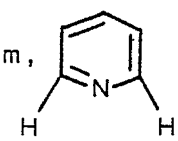 ).

Analyses calculated for $C_{16}H_{12}F_4N_2O_2S$:

| | Theoretical | Found |
|---|---|---|
| C | 51.61 | 51.84 |
| H | 3.25 | 3.19 |
| N | 7.52 | 7.32 |

Example 18

3-Cyclohexyl-2-(3-pyridyl)-4-thiazolidinone, having a melting point of about 110—111°C., from 10 g. of cyclohexylamine, 15 g. of 3-pyridylcarboxaldehyde, and 13 g. of thioglycolic acid. Wt. 4.6 g.

Analyses calculated for $C_{14}H_{18}N_2OS$:

| | Theoretical | Found |
|---|---|---|
| C | 64.09 | 63.90 |
| H | 6.92 | 6.72 |
| N | 10.68 | 10.44 |

Example 19

3-Cyclopropyl-2-(3-pyridyl)-4-thiazolidinone, having a melting point of about 112—113°C., from 8 g. of cyclopropylamine, 15 g. of 3-pyridylcarboxaldehyde, and 13 g. of thioglycolic acid. Wt. 16 g.

Analyses calculated for $C_{11}H_{12}N_2OS$:

| | Theoretical | Found |
|---|---|---|
| C | 60.00 | 60.11 |
| H | 5.45 | 5.32 |
| N | 12.73 | 12.55 |

Example 20

3-(3-Chlorophenyl)-5-methyl-2-(3-pyridyl)-4-thiazolidinone, having a melting point of about 133°C., from 18 g. of 3-chloroaniline, 15 g. of 3-pyridylcarboxaldehyde, and 13 g. of thiolactic acid. Wt. 9.5 g.

Analyses calculated for $C_{15}H_{13}ClN_2OS$:

| | Theoretical | Found |
|---|---|---|
| C | 59.11 | 58.98 |
| H | 4.30 | 4.26 |
| N | 9.19 | 9.10 |

Example 21

3-(2-Chlorophenyl)-2-(3-pyridyl)-4-thiazolidinone, having a melting point of about 134°C., from 18 g. of 2-chloroaniline, 15 g. of 3-pyridylcarboxaldehyde, and 13 g. of thioglycolic acid. Wt. 4.6 g.

Analyses calculated for $C_{14}H_{11}ClN_2OS$:

| | Theoretical | Found |
|---|---|---|
| C | 57.83 | 57.49 |
| H | 3.81 | 3.74 |
| N | 9.63 | 9.32 |

Example 22

2-(3-Pyridyl)-3-(4-tolyl)-4-thiazolidinone, having a melting point of about 187°C., from 15 g. of *p*-toluidine, 15 g. of 3-pyridylcarboxaldehyde, and 13 g. of thioglycolic acid. Wt. 16 g.

Analyses calculated for $C_{15}H_{14}N_2OS$:

| | Theoretical | Found |
|---|---|---|
| C | 66.64 | 66.79 |
| H | 5.22 | 5.13 |
| N | 10.36 | 10.58 |

Example 23

3-(4-Methoxyphenyl)-2-(3-pyridyl)-4-thiazolidinone, having a melting point of about 144—145°C., from 17 g. of 4-methoxyaniline, 15 g. of 3-pyridylcarboxaldehyde, and 13 g. of thioglycolic acid. Wt. 5 g.

Analyses calculated for $C_{15}H_{14}N_2O_2S$:

| | Theoretical | Found |
|---|---|---|
| C | 62.92 | 63.20 |
| H | 4.93 | 5.05 |
| N | 9.78 | 9.99 |

Example 24

2-(3-Pyridyl)-3-($\alpha$,$\alpha$,$\alpha$-trifluoro-*p*-tolyl)-4-thiazolidinone, having a melting point of about 148°C., from 16 g. of 4-aminobenzotrifluoride, 15 g. of 3-pyridylcarboxaldehyde, and 13 g. of thioglycolic acid. Wt. 8 g.

Analyses calculated for $C_{15}H_{11}F_3N_2OS$:

| | Theoretical | Found |
|---|---|---|
| C | 55.55 | 55.15 |
| H | 3.42 | 3.41 |
| N | 8.64 | 8.85 |

Example 25

3-Hexyl-2-(3-pyridyl)-4-thiazolidinone, having a melting point of about 78°C., from 12 g. of *n*-hexylamine, 11 g. of 3-pyridylcarboxaldehyde, and 10 g. of thioglycolic acid. Wt. 21 g.

Analyses calculated for $C_{14}H_{20}N_2OS$:

| | Theoretical | Found |
|---|---|---|
| C | 63.60 | 63.52 |
| H | 7.63 | 7.47 |
| N | 10.60 | 10.59 |

Example 26

3-Cyclohexyl-5-methyl-2-(3-pyridyl)-4-thiazolidinone, having a melting point of about 106°C., from 10 g. of cyclohexylamine, 10.7 g. of 3-pyridylcarboxaldehyde, and 10.6 g. of thiolactic acid. Wt. 13 g.

Analyses calculated for $C_{15}H_{20}N_2OS$:

| | Theoretical | Found |
|---|---|---|
| C | 65.18 | 65.40 |
| H | 7.29 | 7.00 |
| N | 10.14 | 10.00 |

Example 27

5-Methyl-3-(4-tolyl)-2-(3-pyridyl)-4-thiazolidinone, having a melting point of about 170°C., from 10.7 g. of *p*-toluidine, 10.7 g. of 3-pyridylcarboxaldehyde, and 10.6 g. of thiolactic acid. Wt. 18 g.

Analyses calculated for $C_{16}H_{16}N_2OS$:

| | Theoretical | Found |
|---|---|---|
| C | 68.06 | 68.32 |
| H | 5.00 | 5.29 |
| N | 9.92 | 9.86 |

Example 28

3-(4-Chlorobenzyl)-5-methyl-2-(3-pyridyl)-4-thiazolidinone, as an oil, from 14 g. of 4-chlorobenzylamine, 10.7 g. of 3-pyridylcarboxaldehyde, and 10.6 g. of thiolactic acid. Wt. 7.9 g.

Analyses calculated for $C_{16}H_{15}ClN_2OS$:

| | Theoretical | Found |
|---|---|---|
| C | 60.28 | 60.42 |
| H | 4.71 | 4.61 |
| N | 8.79 | 8.59 |

Example 29

3-(2-Chlorophenyl)-5-methyl-2-(3-pyridyl)-4-thiazolidinone, having a melting point of about 104—105°C., from 12.7 g. of 2-chloroaniline, 10.7 g. of 3-pyridylcarboxaldehyde, and 10.6 g. of thiolactic acid. Wt. 600 mg.

Analyses calculated for $C_{15}H_{13}ClN_2OS$:

| | Theoretical | Found |
|---|---|---|
| C | 59.11 | 59.32 |
| H | 4.30 | 4.54 |
| N | 9.19 | 8.95 |

Example 30

5-Methyl-3-(1-methylhexyl)-2-(3-pyridyl)-4-thiazolidinone, as an oil, from 11.5 g. of 2-aminoheptane, 10.7 g. of 3-pyridylcarboxaldehyde, and 10.6 g. of thiolactic acid. Wt. 14 g.

NMR ($CDCl_3$) ($\delta$)

1.2 (m, 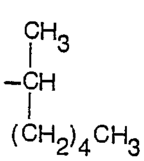 ); 4.0 (m, 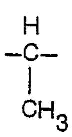 );

5.6 (d, 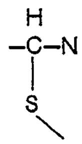) ; 7.6 (m, 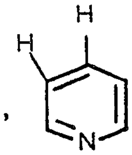 ) ;

8.8 (m, 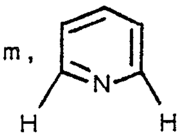 ).

Analyses calculated for $C_{16}H_{24}N_2OS$:

| | Theoretical | Found |
|---|---|---|
| C | 65.71 | 65.49 |
| H | 8.27 | 8.18 |
| N | 9.58 | 9.32 |

Example 31

3-Hexyl-5-methyl-2-(3-pyridyl)-4-thiazolidinone, having a melting point of about 67—68°C., from 10.1 g. of *n*-hexylamine, 10.7 g. of 3-pyridylcarboxaldehyde, and 10.6 g. of thiolactic acid. Wt. 5.7 g.

Analyses calculated for $C_{15}H_{22}N_2OS$:

| | Theoretical | Found |
|---|---|---|
| C | 64.71 | 64.61 |
| H | 7.97 | 7.77 |
| N | 10.05 | 10.05 |

Example 32

3-(2-Fluorophenyl)-5-methyl-2-(3-pyridyl)-4-thiazolidinone, having a melting point of about 105°C., from 11 g. of 2-fluoroaniline, 10.7 g. of 3-pyridylcarboxaldehyde, and 10.6 g. of thiolactic acid. Wt. 16 g.

Analyses calculated for $C_{15}H_{13}FN_2OS$:

| | Theoretical | Found |
|---|---|---|
| C | 62.48 | 62.26 |
| H | 4.54 | 4.52 |
| N | 9.72 | 9.64 |

Example 33

3-(4-Fluorophenyl)-5-methyl-2-(3-pyridyl)-4-thiazolidinone, having a melting point of about 148°C., from 22.2 g. of 4-fluoroaniline, 21.4 g. of 3-pyridylcarboxaldehyde, and 24 g. of thiolactic acid. Wt. 36 g.

Analyses calculated for $C_{15}H_{13}FN_2OS$:

| | Theoretical | Found |
|---|---|---|
| C | 62.48 | 62.56 |
| H | 4.54 | 4.31 |
| N | 9.72 | 9.41 |

Example 34

3-(3-Nitrophenyl)-2-(3-pyridyl)-4-thiazolidinone, having a melting point of about 114—115°C., from 13.8 g. of 3-nitroaniline, 11 g. of 3-pyridylcarboxaldehyde, and 9 g. of thioglycolic acid. Wt. 1.5 g.

Analyses calculated for $C_{14}H_{11}N_3O_3S$:

| | Theoretical | Found |
|---|---|---|
| C | 55.81 | 55.74 |
| H | 3.65 | 3.69 |
| N | 13.95 | 13.77 |

Example 35

3-(4-Phenoxyphenyl)-2-(3-pyridyl)-4-thiazolidinone, having a melting point of about 168—170°C., from 26 g. of 4-phenoxyaniline, 15 g. of 3-pyridylcarboxaldehyde, and 13 g. of thioglycolic acid. Wt. 26 g.

Analyses calculated for $C_{20}H_{16}N_2O_2S$:

| | Theoretical | Found |
|---|---|---|
| C | 68.94 | 68.80 |
| H | 4.63 | 4.60 |
| N | 8.04 | 7.91 |

Example 36

3-(2-Cyclopentyl-1-methyl)ethyl-5-methyl-2-(3-pyridyl)-4-thiazolidinone, having a melting point of about 102°C., from 26 g. of $\alpha$-methylcyclopentaneethylamine, 22 g. 3-pyridylcarboxaldehyde, and 25 g. of thiolactic acid. Wt. 2 g.

NMR ($CDCl_3$) ($\delta$)

1.2 (d, 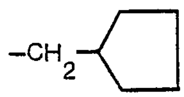 ); 1.5 (d, 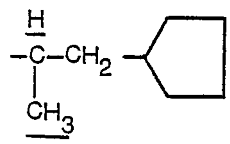 ;

4.0 (m, 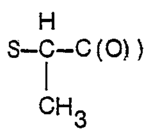 ); 5.6 (s, 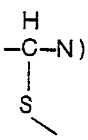 );

7.5 (m, 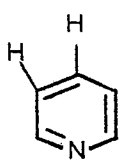 ); 8.8 (m, 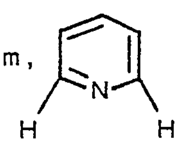 ).

Example 37

5-Methyl-3-($\alpha$-methylbenzyl)-2-(3-pyridyl)-4-thiazolidinone, having a melting point of about 89°C., from 12 g. of $\alpha$-methylbenzylamine, 10.7 g. of 3-pyridylcarboxaldehyde, and 10.7 g. of thiolactic acid. Wt. 1.8 g.

Analyses calculated for $C_{17}H_{18}N_2OS$:

| | Theoretical | Found |
|---|---|---|
| C | 68.43 | 68.17 |
| H | 6.08 | 5.87 |
| N | 9.39 | 9.31 |

Example 38

3-Isopropyl-5-methyl-2-(3-pyridyl)-4-thiazolidinone, having a melting point of about 110—111°C., from 11.8 g. of isopropylamine, 20.0 g. of 3-pyridylcarboxaldehyde, and 22.0 g. of thiolactic acid. Wt. 21 g.

Analyses calculated for $C_{12}H_{16}N_2OS$:

| | Theoretical | Found |
|---|---|---|
| C | 60.99 | 60.76 |
| H | 6.82 | 6.54 |
| N | 11.85 | 12.07 |

Example 39

3-(3,5-Xylyl)-5-methyl-2-(3-pyridyl)-4-thiazolidinone, having a melting point of about 140—142°C., from 25 g. of 3,5-dimethylaniline, 22 g. of 3-pyridylcarboxaldehyde, and 12 g. of thiolactic acid. Wt. 12.

NMR ($CDCl_3$) ($\delta$)

1.7 (q, $-CH_3$) ; 2.2 (s, $-CH_3$) ; 4.1 (q, 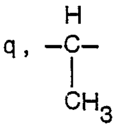 ;

6.1 (s, 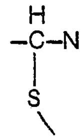 ) ; 6.8 – 8.4 (m, 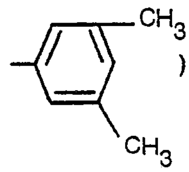 ) ;

8.8 (m, 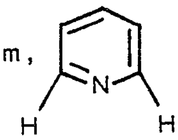 ).

Analyses calculated for $C_{16}H_{18}N_2OS$:

| | Theoretical | Found |
|---|---|---|
| C | 68.43 | 68.17 |
| H | 6.08 | 5.83 |
| N | 9.39 | 9.31 |

Example 40

2-(3-Pyridyl)-3-(2-thiazolyl)-4-thiazolidinone, having a melting point of about 164—165°C., from 14.0 g. of 2-aminothiazole, 15.0 g. of 3-pyridylcarboxaldehyde, and 13.0 g. of thioglycolic acid. Wt. 2.0 g.

Analyses calculated for $C_{11}H_9N_3OS_2$:

| | Theoretical | Found |
|---|---|---|
| C | 50.17 | 50.37 |
| H | 3.44 | 3.51 |
| N | 15.96 | 15.88 |

Example 41

3-(3,4-Xylyl)-5-methyl-2-(3-pyridyl)-4-thiazolidinone, having a melting point of about 189°C., from 12.1 g. of 3,4-dimethylaniline, 10.7 g of 3-pyridylcarboxaldehyde, and 12 g. of thiolactic acid. Wt. 16 g.

NMR (DMSO) ($\delta$)

2.6 (d, $-CH_3$) ; 2.1 (s, $CH_3$) ; 4.2 (q, 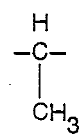 ) ;

6.6 (s, 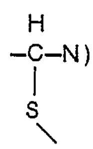 ) ; 8,8 (m, 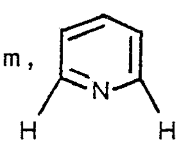 ).

Analyses calculated for $C_{17}H_{18}N_2OS$:

| | Theoretical | Found |
|---|---|---|
| C | 68.43 | 68.64 |
| H | 6.08 | 6.22 |
| N | 9.39 | 9.29 |

Example 42

3-[2-(1-Methoxypropyl)]-2-(3-pyridyl)-5-methyl-4-thiazolidinone, having a melting point of about 111—112°C., from 8.9 g. of 2-amino-1-methoxypropane, 10.7 g. 3-pyridylcarboxaldehyde, and 15 g. of thiolactic acid. Wt. 6.9 g.

NMR ($CDCl_3$) (δ)

1.3 (q, $-CH_3$) ; 3.3 (s, $-OCH_3$) ;

3.8 (m, 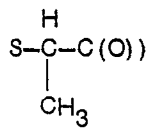) ; 5.8 (s, 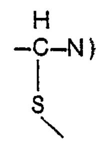) ;

7.6 (m, 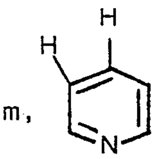) ; 8.8 (m, 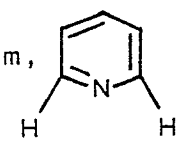).

Example 43

3-Isopropyl-2-(3-pyridyl)-4-thiazolidinone, having a melting point of about 119—120°C., from 7 g. of isopropylamine, 15 g. of 3-pyridylcarboxaldehyde, and 13 g. of thioglycolic acid. Wt. 12 g.

Analyses calculated for $C_{11}H_{14}N_2OS$:

| | Theoretical | Found |
|---|---|---|
| C | 59.43 | 59.19 |
| H | 6.35 | 6.25 |
| N | 12.60 | 12.32 |

Example 44

3-(Cyclohexylmethyl)-5-methyl-2-(3-pyridyl)-4-thiazolidinone, having a melting point of about 73—74°C., from 10.7 g. of 3-pyridylcarboxaldehyde, 11.3 g. of cyclohexanemethanamine, and 10.8 g of thiolactic acid. Wt. 11 g.

Analyses calculated for $C_{16}H_{22}N_2OS$:

| | Theoretical | Found |
|---|---|---|
| C | 66.17 | 65.91 |
| H | 7.64 | 7.47 |
| N | 9.65 | 9.69 |

Example 45

3-Cyclooctyl-5-methyl-2-(3-pyridyl)-4-thiazolidinone, having a melting point of about 58—61°C., from 12.7 g. of cyclooctylamine, 10.7 g. of 3-pyridylcarboxaldehyde, and 10.6 g. of thiolactic acid. Wt. 11.2 g.

Analyses calculated for $C_{17}H_{24}N_2OS$:

| | Theoretical | Found |
|---|---|---|
| C | 67.07 | 66.89 |
| H | 7.95 | 7.72 |
| N | 9.20 | 9.33 |

Example 46

5-Methyl-3-phenyl-2-(3-pyridyl)-4-thiazolidinone, having a melting point of about 159—161°C., from 18.6 g. of aniline, 21.4 g. of 3-pyridylcarboxaldehyde, and 21.2 g. of thiolactic acid. Wt. 15 g.

Analyses calculated for $C_{15}H_{14}N_2OS$:

| | Theoretical | Found |
|---|---|---|
| C | 66.64 | 66.59 |
| H | 5.22 | 5.07 |
| N | 10.36 | 10.59 |

Example 47

5-Methyl-3-(2-tolyl)-2-(3-pyridyl)-4-thiazolidinone, as an oil, from 21.4 g. of 2-toluidine, 21.4 g. of 3-pyridyl-carboxaldehyde, and 25 g. of thiolactic acid. Wt. 6 g.

NMR ($CDCl_3$) ($\delta$)

1.6(q, $—CH_3$); 2.1 (s, $—CH_3$), 2.3 (s, 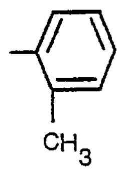 ); 4.1 (q, 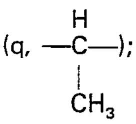); 5.8 (s, 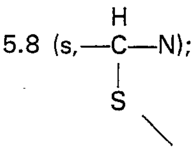);

7.1 (m, 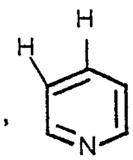 ); 8.6 (m, 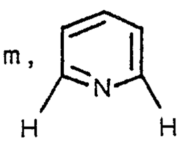 ).

Analyses calculated for $C_{16}H_{16}N_2OS$:

| | Theoretical | Found |
|---|---|---|
| C | 67.58 | 67.54 |
| H | 5.67 | 5.57 |
| N | 9.89 | 10.02 |

Example 48

5-Methyl-3-(4-methylthiophenyl)-2-(3-pyridyl)-4-thiazolidinone, having a melting point of about 147—148°C., from 17.5 g. of 4-methylthioaniline hydrochloride, 10.7 g. of 3-pyridylcarboxaldehyde, and 12 g. of thiolactic acid. Wt. 23 g.

Analyses calculated for $C_{16}H_{16}N_2OS_2$:

| | Theoretical | Found |
|---|---|---|
| C | 60.73 | 60.63 |
| H | 5.10 | 4.90 |
| N | 8.85 | 9.00 |

Example 49

5-Methyl-3-[2-(1-methoxypropyl)]-2-(3-pyridyl)-4-thiazolidinone, having a melting point of about 111—112°C., from 8.9 g. of 2-amino-1-methoxypropane, 10.7 g. of 3-pyridylcarboxaldehyde, and 15 g. of thiolactic acid. Wt. 2.1 g. Identified by NMR spectrum.

Example 50

3-(4-Nitrophenyl)-2-(3-pyridyl)-4-thiazolidinone, having a melting point of about 142—143°C., from 13.8 g. of 4-nitroaniline, 11 g. of 3-pyridylcarboxaldehyde, and 9 g. of thioglycolic acid. Wt. 4.0 g.

Analyses calculated for $C_{14}H_{11}N_3O_3S$:

| | Theoretical | Found |
|---|---|---|
| C | 55.81 | 55.66 |
| H | 3.68 | 3.61 |
| N | 13.95 | 13.62 |

Example 51

2-(3-Pyridyl)-3-(2-norbornyl)-4-thiazolidinone, having a melting point of about 143°C., from 14 g. of norbornylamine, 15 g. of 3-pyridylcarboxaldehyde, and 13 g. of thioglycolic acid. Wt. 7.5 g.

Analyses calculated for $C_{14}H_{18}N_2SO$:

| | Theoretical | Found |
|---|---|---|
| C | 65.66 | 65.39 |
| H | 6.61 | 6.40 |
| N | 10.21 | 10.05 |

Example 52

3-(2,4-Difluorophenyl)-5-methyl-2-(3-pyridyl)-4-thiazolidinone, having a melting point of about 102°C., from 6 g. of 2,4-difluoroaniline, 6 g. of 3-pyridylcarboxaldehyde, and 8 g. of thiolactic acid. Wt. 3.2 g.

Analyses calculated for $C_{15}H_{12}F_2N_2OS$:

| | Theoretical | Found |
|---|---|---|
| C | 58.81 | 58.69 |
| H | 3.95 | 3.94 |
| N | 9.14 | 8.84 |

Example 53

3-(4-Iodophenyl)-5-methyl-2-(3-pyridyl)-4-thiazolidinone, having a melting point of about 149—150°C., from 21.9 g. of 4-iodoaniline, 11 g. of 3-pyridylcarboxaldehyde, and 12 g. of thiolactic acid. Wt. 12 g.

Analyses calculated for $C_{15}H_{13}IN_2OS$:

| | Theoretical | Found |
|---|---|---|
| C | 45.47 | 45.24 |
| H | 3.31 | 3.09 |
| N | 7.07 | 6.97 |

Example 54

5-Methyl-3-(4-methylbenzyl)-2-(3-pyridyl)-4-thiazolidinone, having a melting point of about 96°C., from 12 g. of 4-methylbenzylamine, 10.7 g. of 3-pyridylcarboxaldehyde, and 10.7 g. of thiolactic acid. Wt. 4.9 g.

Analyses calculated for $C_{17}H_{18}N_2OS$:

| | Theoretical | Found |
|---|---|---|
| C | 68.43 | 68.33 |
| H | 6.08 | 5.79 |
| N | 9.39 | 9.21 |

Example 55

5-Methyl-3-(4-methylcyclohexyl)-2-(3-pyridyl)-4-thiazolidinone, having a melting point of about 108—109°C., from 11.5 g. 4-methylcyclohexylamine, 10.5 g. of 3-pyridylcarboxaldehyde, and 11 g. thiolactic acid. Wt. 500 mg.

Analyses calculated for $C_{16}H_{22}N_2OS$:

| | Theoretical | Found |
|---|---|---|
| C | 66.17 | 66.45 |
| H | 7.64 | 7.82 |
| N | 9.65 | 9.78 |

Example 56

3-(2,3-Dichlorobenzyl)-2-(3-pyridyl)-5-methyl-4-thiazolidinone, having a melting point of about 125—126°C., from 17.6 g. of 2,4-dichlorobenzylamine, 10.7 g. of 3-pyridylcarboxaldehyde, and 12 g. of thiolactic acid. Wt. 15 g.

Analyses calculated for $C_{16}H_{14}Cl_2N_2OS$:

| | Theoretical | Found |
|---|---|---|
| C | 54.40 | 54.38 |
| H | 3.99 | 3.71 |
| N | 7.93 | 8.08 |

Example 57

3-(2-Methoxybenzyl)-5-methyl-2-(3-pyridyl)-4-thiazolidinone, as an oil, from 13.7 g. of 2-methoxybenzylamine, 10.5 g. of 3-pyridylcarboxaldehyde, and 10.7 g. of thiolactic acid. Wt. 2 g.

NMR ($CDCl_3$) ($\delta$)

1.7 (q, $-CH_3$); 3.7 (s, $-OCH_3$); 4.1 (s, 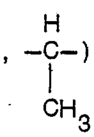);

4.5 (q, $-CH_2-$); 5.5 (s, 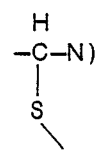);

7.3 (m, 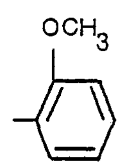); 8.8 (m, 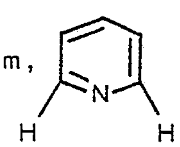).

Analyses calculated for $C_{17}H_{18}N_2O_2S$:

| | Theoretical | Found |
|---|---|---|
| C | 64.94 | 64.71 |
| H | 5.77 | 5.53 |
| N | 8.91 | 8.97 |

Example 58

3-(2-Furfuryl)-5-methyl-2-(3-pyridyl)-4-thiazolidinone, having a melting point of about 74°C., from 19.4 g. of furfurylamine, 22 g. of 3-pyridylcarboxaldehyde, and 25 g. of thiolactic acid. Wt. 6 g.

Analyses calculated for $C_{14}H_{14}N_2O_2S$:

| | Theoretical | Found |
|---|---|---|
| C | 61.29 | 60.91 |
| H | 5.14 | 5.30 |
| N | 10.21 | 10.43 |

Example 59

5-Methyl-2-(3-pyridyl)-3-[(tetrahydro-2-furanyl)methyl]-4-thiazolidinone, having a melting point of about 86—87°C., from 10.6 g. of 3-pyridylcarboxaldehyde, 10.1 g. of tetrahydro-2-furanmethane-amine, and 10.7 g. of thiolactic acid. Wt. 5.5 g.

Analyses calculated for $C_{14}H_{18}N_2O_2S$:

| | Theoretical | Found |
|---|---|---|
| C | 60.41 | 60.15 |
| H | 6.52 | 6.36 |
| N | 10.06 | 10.20 |

Example 60

3-[2-(Dimethylamino)ethyl]-5-methyl-2-(3-pyridyl)-4-thiazolidinone, as a solid, from 10.7 g. of 3-pyridylcarboxaldehyde, 8.8 g. of 2-dimethylaminoethylamine, and 12 g. of thioglycolic acid. Wt. 12 g.

NMR ($CDCl_3$) ($\delta$)

1.6 (d, $-CH_3$) ; 2.1 (s, $-N(CH_3)_2$) ;

2.6 (m, $-CH_2-$) ; 3.9 (m, $-CH_2-$) ; 5.9 (s, 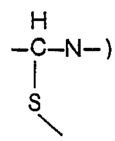) ;

7.6 (m, 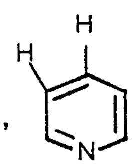) ; 8.8 (m, 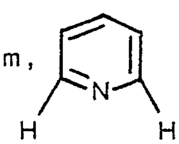).

Analyses calculated for $C_{13}H_{19}H_3OS$:

| | Theoretical | Found |
|---|---|---|
| C | 58.87 | 58.57 |
| H | 7.17 | 6.99 |
| N | 15.85 | 15.53 |

Example 61

3-(3-chloro-4-methylphenyl)-5-methyl-2-(3-pyridyl)-4-thiazolidinone, having a melting point of about 150—160°C., from 6.43 g. of 3-pyridylcarboxaldehyde, 8.5 g. of 3-chloro-4-methylaniline, and 6.7 g. of thiolactic acid. Wt. 10.5 g.

Analyses calculated for $C_{16}H_{15}ClN_2OS$:

| | Theoretical | Found |
|---|---|---|
| C | 60.28 | 60.10 |
| H | 4.74 | 4.93 |
| N | 8.79 | 8.76 |

Example 62

3-(2,4-Dimethylphenyl)-5-methyl-2-(3-pyridyl)-4-thiazolidinone, having a melting point of about 121—123°C., from 25 g. of 2,4-dimethylaniline, 22 g. of 3-pyridylcarboxaldehyde, and 24 g. of thiolactic acid. Wt. 14 g.

NMR ($CDCl_3$) ($\delta$)

1.7 (d, $-CH_3$) ; 2.2 (d, $-CH_3$) ; 4.2 (q, 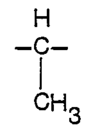 ) ;

5.9 (s, 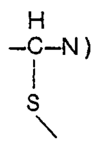 ) ; 7.0 (m, 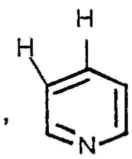 ) ;

8.8 (m, 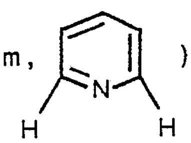 ).

Example 63

3-(2-Trifluoromethylphenyl)-5-methyl-2-(3-pyridyl)-4-thiazolidinone, having a melting point of about 87°C., from 24 g. of 2-trifluoromethylaniline, 16 g. of 3-pyridylcarboxaldehyde, and 18 g. of thiolactic acid. Wt. 4.0 g.

Analyses calculated for $C_{16}H_{13}N_2F_3SO$:

| | Theoretical | Found |
|---|---|---|
| C | 53.93 | 53.64 |
| H | 4.24 | 4.22 |
| N | 7.86 | 8.02 |

NMR ($CDCl_3$) ($\delta$)

1.8 (d, 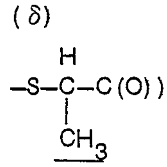 ) ; 4.3 (m, 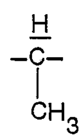 ) ; 6.0 (s, 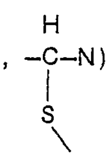 ) ;

6.8 – 8.0 (m, 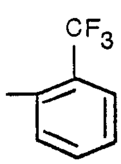 , 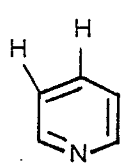 ) ; 8.8 (m, 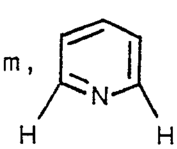 ).

Example 64

3-(4-Bromo-3-methylphenyl)-5-methyl-2-(3-pyridyl)-4-thiazolidinone, having a melting point of about 127—129°C., from 11.2 g. of 4-bromo-3-methylaniline, 6.4 g. of 3-pyridylcarboxaldehyde, and 6.7 g. of thiolactic acid. Wt. 12.2 g.

Analyses calculated for $C_{15}H_{14}BrN_2OS$:

| | Theoretical | Found |
|---|---|---|
| C | 51.44 | 51.64 |
| H | 4.03 | 4.22 |
| N | 8.00 | 7.82 |

Example 65

3-(4-Chlorophenyl)-5,5-dimethyl-2-(3-pyridyl)-4-thiazolidinone

To 150 ml. of anhydrous tetrahydrofuran cooled to –70°C., under an atmosphere of dry nitrogen, there was added 25 ml. of a hexane solution of *n*-butyllithium all in one portion. The mixture was again cooled to –70°C., and a soluton of 15 g. of 3-(4-chlorophenyl)-5-methyl-2-(3-pyridyl)-4-thiazolidinone (prepared as in Example 1, *supra*) in 100 ml. of anhydrous tetrahydrofuran was added dropwise with stirring. Approximately 0.5 hour after the addition was complete 14 g. of methyl iodide was added to the mixture dropwise with continued stirring and then the reaction mixture was stirred overnight and allowed to gradually warm to room temperature.

The reaction was worked up by adding water and extracting with ether. The ether layer was dryed over anhydrous magnesium sulfate, the drying agent filtered off and the filtrate concentrated *in vacuo* to leave a residual oil. The oil was crystallized using a mixture of petroleum ether (boiling point 60—70°C.) and ethyl ether. A product was obtained having a melting point of about 140—141°C., which product was identified as 3-(4-chlorophenyl)-5,5-dimethyl-2-(3-pyridyl)-4-thiazolidinone. Wt. 4.8 g.

NMR ($CDCl_3$/DMSO) ($\delta$)

1.7 (s, $-CH_3$); 6.3 (s, 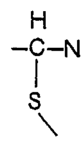); 7.2 (s, 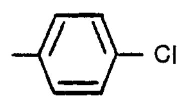);

7.7 (d, 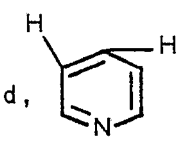); 8.8 (m, 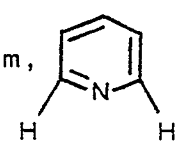).

Analyses calculated for $C_{16}H_{15}ClN_2OS$:

| | Theoretical | Found |
|---|---|---|
| C | 60.28 | 60.07 |
| H | 4.74 | 4.67 |
| N | 8.79 | 8.52 |

Following the same general procedure of Example 65, the following additional compounds were prepared and identified. The compounds, together with the principal starting materials and weights thereof used in the preparations, are listed in the examples set forth hereinafter.

Example 66

5-n-Butyl-3-(4-chlorophenyl)-5-methyl-2-(3-pyridyl)-4-thiazolidinone, having a melting point of about 76—77°C., from 15 g. of 3-(4-chlorophenyl)-5-methyl-2-(3-pyridyl)-4-thiazolidinone, 25 ml. of a hexane solution of *n*-butyllithium, and 9 g. of *n*-butyl iodide. Wt. 2 g.

Analyses calculated for $C_{19}H_{21}ClN_2OS$:

| | Theoretical | Found |
|---|---|---|
| C | 63.23 | 63.03 |
| H | 5.87 | 5.66 |
| N | 7.76 | 8.03 |

Example 67

3-(4-Chlorophenyl)-5-methyl-5-propyl-2-(3-pyridyl)-4-thiazolidinone, having a melting point of about 81—83°C., from 15.2 g. of 3-(4-chlorophenyl)-5-methyl-2-(3-pyridyl)-4-thiazolidinone (prepared as in Example 1, *supra*, 8.5 g. of *n*-propyl iodide, and 23 ml. of a hexane solution of *n*-butyllithium. Wt. 1.6 g.

Analyses calculated for $C_{18}H_{19}ClN_2OS$:

| | Theoretical | Found |
|---|---|---|
| C | 62.33 | 62.55 |
| H | 5.52 | 5.28 |
| N | 8.08 | 8.13 |

Example 68

3-(4-Chlorophenyl)-5-hexyl-5-methyl-2-(3-pyridyl)-4-thiazolidinone, having a melting point of about 82—83°C., from 15.2 g. of 3-(4-chlorophenyl)-5-methyl-2-(3-pyridyl)-4-thiazolidinone (prepared as in Example 1, *supra*), 10.5 g. of *n*-hexyl iodide, and 23 ml. of a hexane solution of *n*-butyllithium. Wt. 1.5 g.

Analyses calculated for $C_{21}H_{25}ClN_2OS$:

| | Theoretical | Found |
|---|---|---|
| C | 64.85 | 64.59 |
| H | 6.48 | 6.23 |
| N | 7.20 | 7.19 |

Example 69

5-Butyl-3-(4-chlorophenyl)-2-(3-pyridyl)-4-thiazolidinone, having a melting point of about 93—94°C. from 13 g. of 3-(4-chlorophenyl)-2-(3-pyridyl)-4-thiazolidinone (prepared from 9 g. of 4-chloroaniline, 7.5 g of 3-pyridyl-carboxaldehyde and 15 g. of thioglycolic acid, 9.2 g. of *n*-butyl iodide, and 25 ml. of a hexane solution of *n*-butyllithium. Wt. 700 mg.

Analyses calculated for $C_{18}H_{19}ClN_2OS$:

| | Theoretical | Found |
|---|---|---|
| C | 62.33 | 62.11 |
| H | 5.52 | 5.28 |
| N | 8.08 | 8.08 |

Example 70

3-(4-Chlorophenyl)tetrahydro-2-(3-pyridyl)-4H-1,3-thiazin-4-one

This compound was prepared stepwise as follows.

*Step 1*

A mixture of 53.5 g. of 3-pyridylcarboxaldehyde, 63.5 g. of 4-chloroaniline, and 600 ml. of toluene was refluxed for about 4 hours, using a Dean-Stark trap to collect the water given off by the

reaction. A total of about 9 ml. of water was collected. The reaction product mixture was cooled, filtered, and the filtrate concentrated to dryness *in vacuo*. The residue was recrystallized from hot ethyl ether to yield 87 g. of product having a melting point of about 72°C., and identified as 3-[(4-chlorophenylimino)methyl]pyridine.

*Step 2.*

A mixture was prepared of 15 g. of 3-[(4-chlorophenylimino)methyl]pyridine (prepared above), 15 g. of $\beta$-mercaptopropionic acid, and 200 ml. of toluene, and allowed to stand overnight at ambient room temperature. The reaction mixture was concentrated *in vacuo* to yield a yellow oil, identified as 3-[$\alpha$-(4-chloroanilino)-$\alpha$-(3-pyridyl)methylthio]propionic acid. A protion of the yellow oil was used in the next step.

*Step 3*

A mixture of 6 g. of the addition product from step 2, *supra*, 6 g. of N,N'-dicyclohexylcarbodiimide, and 100 ml. of methylene chloride was prepared at room temperature. On standing for a period of time, white solids precipitated. The solids were filtered off, and identified as N,N'-dicyclohexylurea. The filtrate was concentrated to dryness *in vacuo*, and the residue thus obtained was again taken up in methylene chloride, and filtered to remove additional N,N'-dicyclohexylurea. The filtrate was concentrated to dryness *in vacuo*. The residue remaining was washed with 20 ml. of cold acetone and the white solids filtered off and air dried. The solids had a melting point of about 149—150°C. and shown to be 3-(4-chlorophenyl)tetrahydro-2-(3-pyridyl)-4H-1,3-thiazin-4-one.

NMR ($CDCl_3$/DMSO) ($\delta$)

3.0 (s, $-CH_2CH_2-$); 3.6 (m, 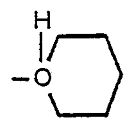); 6.1 (s, 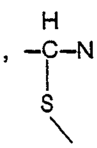);

7.2 (m, 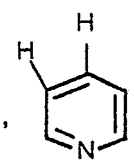); 8.8 (m, 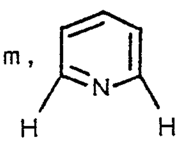).

Following the stepwise general procedure of the above Example 70, additional compounds were prepared and identified. In some examples, better yields were obtained in Step 2 by refluxing the reactants and this is so indicated at the end of those examples. The compounds, together with the principal starting materials and weights or volumes thereof used in the preparations, are listed in the examples set forth hereinafter.

Example 71

3-(4-Tolyl)tetrahydro-2-(3-pyridyl)-4H-1,3-thiazin-4-one, having a melting point of about 178—180°C., form 3.21 g. of 3-pyridylcarboxaldehyde, 3.21 g. of $p$-toluidine, 3.18 g. of $\beta$-mercaptopropionic acid, and 6.18 g. of N,N'-dicyclohexylcarbodiimide. Refluxed overnight. Wt. 1.6 g.

Analyses calculated for $C_{16}H_{16}N_2OS$:

| | Theoretical | Found |
|---|---|---|
| C | 67.58 | 67.36 |
| H | 5.67 | 5.72 |
| N | 9.85 | 9.56 |
| S | 11.28 | 11.08 |

Example 72

3-Cyclohexyltetrahydro-2-(3-pyridyl)-4H-1,3-thiazin-4-one, having a melting point of about 162—164°C., from 3.21 g. of 3-pyridylcarboxaldehyde, 2.97 g. of cyclohexylamine, 3.18 g. of $\beta$-

mercaptopropionic acid, and 6.18 g. of N,N'-dicyclohexylcarbodiimide. Refluxed 4 hours. Wt. 3.58 g.

Analyses calculated for $C_{15}H_{20}N_2OS$:

| | Theoretical | Found |
|---|---|---|
| C | 65.18 | 64.95 |
| H | 7.27 | 6.99 |
| N | 10.14 | 9.92 |
| S | 11.60 | 11.39 |

Example 73

3-Hexyltetrahydro-2-(3-pyrridyl)-4H-1,3-thiazin-4-one, having a melting point of about 84—86°C., from 3.21 g. of 3-pyridylcarboxaldehyde, 3.03 g. of hexylamine, 3.18 g. of β-mercaptopropionic acid, and 6.18 g. of N,N'-dicyclohexylcarbodiimide. Refluxed overnight. Wt. 2.36 g.

Analyses calculated for $C_{15}H_{22}N_2OS$:

| | Theoretical | Found |
|---|---|---|
| C | 64.71 | 64.92 |
| H | 7.97 | 8.03 |
| N | 10.06 | 9.77 |
| S | 11.52 | 11.57 |

Example 74

3-Cyclopentyltetrahydro-2-(3-pyridyl)-4H-1,3-thiazin-4-one, having a melting point of about 147—149°C., from 3.21 g. of 3-pyridylcarboxaldehyde, 2.55 g. of cyclopentylamine, 3.18 g. of β-mercaptopropionic acid, and 6.18 g. of N,N'-dicyclohexylcarbodiimide. Refluxed overnight. Wt. 1.38 g.

Example 75

3-(3,4-Dichlorophenyl)tetrahydro-2-(3-pyridyl)-4H-1,3-thiazin-4-one, having a melting point of about 157—159°C., from 3.21 g. of 3-pyridylcarboxaldehyde, 4.86 g. of 3,4-dichloroaniline, 3.18 g. of β-mercaptopropionic acid, and 6.18 g. of N,N'-dicyclohexylcarbodiimide.Refluxed overnight. Wt. 6.5 g.

Example 76

3-(2-Chlorophenyl)tetrahydro-2-(3-pyridyl)-4H-1,3-thiazin-4-one, having a melting point of about 111—113°C., from 9.63 g. of 3-pyridylcarboxaldehyde, 11.49 g. of 2-chloroaniline, 9.55 g. of β-mercaptopropionic acid, and 18.57 g. of N,N'-dicyclohexylcarbodiimide. Refluxed overnight. Wt. 6.0 g.

Analyses calculated for $C_{15}H_{13}ClN_2OS$:

| | Theoretical | Found |
|---|---|---|
| C | 59.11 | 59.31 |
| H | 4.30 | 4.22 |
| N | 9.19 | 9.34 |
| S | 10.52 | 10.73 |

Example 77

3-(4-Chlorobenzyl)tetrahydro-2-(3-pyridyl)-4H-1,3-thiazin-4-one, having a melting point of about 88—90°C., from 6.42 g. of 3-pyridylcarboxaldehyde, 8.50 g. 4-chlorobenzylamine, 6.4 g. of β-mercaptopropionic acid, and 12.37 g. of N,N'-dicyclohexylcarbodiimide. Refluxed 6 hours. Wt. 3.1 g.

Analyses calculated for $C_{16}H_{15}ClN_2OS$:

| | Theoretical | Found |
|---|---|---|
| C | 60.28 | 60.50 |
| H | 4.78 | 4.89 |
| N | 8.79 | 8.66 |
| S | 10.06 | 9.79 |

Example 78

3-(4-Fluorophenyl)tetrahydro-2-(3-pyridyl)-4H-1,3-thiazin-4-one, having a melting point of about 162—164°C. from 6.43 g. of 3-pyridylcarboxaldehyde, 6.67 g. of 4-fluoroaniline, 6.37 g. of $\beta$-mercaptopropionic acid, and 12.4 g. of N,N'-dicyclohexylcarbodiimide. Refluxed overnight. Wt. 6.6 g.

Analyses calculated for $C_{15}H_{13}FN_2OS$:

| | Theoretical | Found |
|---|---|---|
| C | 62.48 | 62.29 |
| H | 4.54 | 4.66 |
| N | 9.72 | 9.91 |
| S | 11.12 | 10.91 |

Example 79

Tetrahydro-2-(3-pyridyl)-3-[4-(trifluoromethyl)phenyl]-4H-1,3-thiazin-4-one, having a melting point of about 131—133°C., from 6.43 g. of 3-pyridylcarboxaldehyde, 9.66 g. of 4-trifluoromethylaniline, 6.37 g. of $\beta$-mercaptopropionic acid, and 12.4 g. of N,N'-dicyclohexylcarbodiimide. Refluxed overnight. Wt. 10.6 g.

Analyses calculated for $C_{16}H_{13}F_3N_2OS$:

| | Theoretical | Found |
|---|---|---|
| C | 56.80 | 56.62 |
| H | 3.87 | 3.76 |
| N | 8.28 | 8.31 |
| S | 9.48 | 9.40 |

Example 80

3-(2-Cyclopentyl-1-methylethyl)tetrahydro-2-(3-pyridyl)-4H-1,3-thiazin-4-one, having a melting point of about 100—112°C., from 6.43 g. of 3-pyridylcarboxaldehyde, 7.63 g. of 2-cyclopentyl-1-methylethylamine, 6.37 g. of $\beta$-mercaptopropionic acid, and 12.4 g. of N,N'-dicyclohexylcarbodiimide. Refluxed overnight. Wt. 2.55 g.

Analyses calculated for $C_{17}H_{24}N_2OS$:

| | Theoretical | Found |
|---|---|---|
| C | 67.07 | 66.77 |
| H | 7.95 | 8.05 |
| N | 9.20 | 9.26 |
| S | 10.53 | 10.55 |

Example 81

3-(3,4-Xylyl)tetrahydro-2-(3-pyridyl)-4H-1,3-thiazin-4-one, having a melting point of about 185—188°C., from 6.43 g. of 3-pyridylcarboxaldehyde, 7.27 g. of 3,4-dimethylaniline, 6.37 g. of $\beta$-

mercaptopropionic acid, and 12.4 g. of N,N'-dicyclohexylcarbodiimide. Refluxed overnight. Wt. 8.75 g.

Analyses calculated for $C_{17}H_{18}N_2OS$:

| | Theoretical | Found |
|---|---|---|
| C | 68.43 | 68.66 |
| H | 6.08 | 6.26 |
| N | 9.39 | 9.62 |
| S | 10.75 | 10.56 |

Example 82

3-(4-Methylthiophenyl)tetrahydro-2-(3-pyridyl)-4H-1,3-thiazin-4-one, having a melting point of about 164—166°C., from 6.43 g. of 3-pyridylcarboxaldehyde, 4-methylthionaniline (obtained from 10.54 g. of 4-methylthioaniline hydrochloride), 6.37 g. of $\beta$-mercaptopropionic acid, and 8.25 g. of N,N'-dicyclohexylcarbodiimide. Refluxed overnight. Wt. 5.72 g.

Analyses calculated for $C_{16}H_{16}N_2OS_2$:

| | Theoretical | Found |
|---|---|---|
| C | 60.76 | 60.68 |
| H | 5.06 | 5.18 |
| N | 8.86 | 8.64 |
| S | 20.25 | 20.34 |

Example 83

3-(2-Fluorophenyl)tetrahydro-2-(3-pyridyl)-4H-1,3-thiazin-4-one, having a melting pont of about 147—149°C., from 6.43 g. of 3-pyridylcarboxaldehyde, 6.67 g. of 2-fluoroaniline, 6.37 g. of $\beta$-mercaptopropionic acid, and 12.4 g. of N,N'-dicyclohexylcarbodiimide. Refluxed overnight. Wt. 6.93 g.

NMR ($CDCl_3$/DMSO) ($\delta$)

3.0 (s, $-CH_2CH_2-$) ; 6.2 (s, 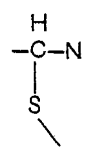) ;

8.8 (m, 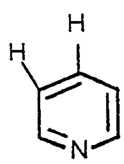) ; 9.0 (m, 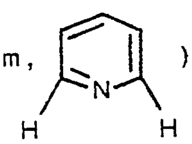).

Example 84

3-(2-Methoxyphenyl)-2-(3-pyridyl)-4-thiazolidinone

This compound was prepared stepwise.

*Step 1.*

A mixture of 17 g. of *o*-anisidine, 15 g. of 3-pyridylcarboxaldehyde, and 13 g. of thioglycolic acid in toluene was refluxed for several hours. The reaction product mixture was cooled and the material which had precipitated was collected on a filter. The product weight 20 g., had a melting point of about 118—120°C., and was identified by NMR and IR spectra as [[(*o*-methoxyanilino)(3-pyridyl)methyl]thio]acetic acid,

*Step 2.*

A mixture of 5 g. of [[(*o*-methoxyanilino)(3-pyridyl)methyl]thio]acetic acid, 3.4 g. of N,N'-dicyclohexylcarbodiimide, and 300 ml. of toluene was refluxed for several hours. The toluene was then removed *in vacuo*. The residue thereby obtained was chromatographed over a silica gel/toluene column

and eluted with a mixture of acetone/toluene. The desired fraction was concentrated and the residue recrystallized from a mixture of ether and pentane to yield product having a melting point of about 104—105°C., and identified as 3-(2-methoxyphenyl)-2-(3-pyridyl)-4-thiazolidinone. Wt. 1.5 g.

Analyses calculated for $C_{15}H_{14}N_2O_2S$:

| | Theoretical | Found |
|---|---|---|
| C | 61.29 | 61.47 |
| H | 5.14 | 4.86 |
| N | 10.21 | 9.97 |

Example 85

3-(4-Chlorophenyl)tetrahydro-5-methyl-2-(3-pyridyl)-4H-1,3-thiazin-4-one

3-(4-Chlorophenyl)tetrahydro-2-(3-pyridyl)-4H-1,3-thiazin-4-one, 3.05 g. (0.01 mole), prepared as described in Example 70, *supra*, was added with mechanical stirring to 40 ml. of anhydrous tetrahydrofuran maintained under a nitrogen atmosphere and then cooled to about −75°C. To the cold solution there was added, over a period of about 15—20 minutes, 4.28 ml. of a hexane solution of *n*-butyllithium (2.4 molar in hexane), while maintaining the reaction temperature below −70°C. After the addition was complete, the reaction mixture was stirred for about 30 minutes at a temperature of about −75°C., followed by the dropwise addition of 5 ml. of methyl iodide over a period of about 10—15 minutes. The reaction product mixture was stirred overnight while being cooled in a dry iceacetone bath, warming gradually to about 0°C., by morning. A peach-colored solid precipitated during the night. The reaction product mixture was warmed to room temperature and methylene chloride added, forming a red solution. The solution was concentrated *in vacuo*. The residue thus obtained was redissolved in methylene chloride and the solution was washed twice with cold salt water and dried over anhydrous sodium sulfate. The drying agent was filtered off and the filtrate concentrated *in vacuo* to leave a residue. The residue was taken up in ethyl acetate and passed through a layer of silica gel (400 ml.). The ethyl acetate solution so treated was concentrated *in vacuo*, and the oil which remained was dissolved in methylene chloride, treated with decolorizing carbon, filtered, and the filtrate concentrated to dryness *in vacuo*. The residue thus obtained was dissolved in ethyl ether, and, upon cooling, a solid crystallized, and was filtered off. The solid had a melting point of about 128—130°C., and weighed 1.1 g. The solid was identified by elemental analyses as 3-(4-chlorophenyl)tetrahydro-5-methyl-2-(3-pyridyl)-4H-1,3-thiazin-4-one.

Analyses calculated for $C_{16}H_{15}ClN_2OS$:

| | Theoretical | Found |
|---|---|---|
| C | 60.28 | 60.46 |
| H | 4.74 | 4.65 |
| N | 8.79 | 8.77 |
| S | 10.06 | 9.94 |

Following the general procedure of Example 85, the following additional compound was prepared and identified.

Example 86

3-(4-Chlorophenyl)tetrahydro-5,5-dimethyl-2-(3-pyridyl)-4H-1,3-thiazin-4-one, having a melting point of about 126—128°C., and weighing 2.60 g., from 4 g. of 3-(4-chlorophenyl)tetrahydro-5-methyl-2-(3-pyridyl)-4H-1,3-thiazin-4-one (from Example 85), 8 ml. of methyl iodide, and 5.4 ml. of a 2.4 M hexane solution of *n*-butyllithium.

Analyses calculated for $C_{17}H_{17}ClN_2OS$:

| | Theoretical | Found |
|---|---|---|
| C | 61.34 | 61.15 |
| H | 5.15 | 4.95 |
| N | 8.42 | 8.47 |
| S | 9.63 | 9.53 |

Example 87

5-Methyl-2-(3-pyridyl)-3-(3-trifluoromethylthiophenyl)-4-thiazolidinone

This compound was prepared step wise.

*Step 1.*

A mixture of 15 g. of trifluoromethylthio-3-nitrobenzene in 100 ml. of absolute methanol was hydrogenated in the presence of Raney nickel catalyst, using a Parr hydrogenation apparatus. When hydrogen uptake had ceased, the reaction was stopped, the catalyst filtered off, and the filtrate concentrated to yield product weighing 12 g. and identified as trifluoromethylthio-3-aminobenzene.

*Step 2.*

A mixture of 11 g. of trifluoromethylthio-3-aminobenzene, 7.7 g. of 3-pyridylcarboxaldehyde and 200 ml. of toluene was refluxed for about 2 hours using a Dean-Stark trap to collect the water produced by the reaction. A total of 1.2 ml. of water was isolated. The reaction product mixture was cooled and concentrated *in vacuo*. The residual oil was dissolved in toluene and chromatographed on a silica column. The material was eluted using toluene-5% acetone eluant, the several fractions from the column being checked for their content by thin layer chromatography. The appropriate fractions were then combined and concentrated to leave a residual oil. The isolated material, a yellow oil weighing 15 g., was identified by NMR spectrum as 3-(3-trifluoromethylthio)-N-(3-pyridylmethylene)-benzenamine. The material was used without further purification in the next step of the reaction.

Step 3.

A mixture of 14 g. of 3-(3-trifluoromethylthio)-N-(3-pyridylmethylene)benzenamine, 8 g. of thiolactic acid, and 200 ml. of toluene was refluxed for about 6 hours, using a Dean-Stark trap to collect the water produced by the reaction. The reaction product mixture was then concentrated *in vacuo* and the residue thereby obtained was dissolved in toluene and chromatographed on a silica column. The product was eluted from the column using 5% acetone-toluene, and the fractions concentrated to leave a yellow oil weighing 6 g. It was identified as 5-methyl-2-(3-pyridyl)-3-(3-trifluoromethylthiophenyl)-4-thiazolidinone.

Example 88

3-(4-Chlorophenyl)-5-(methylthio)-2-(3-pyridyl)-4-thiazolidinone

and

Example 89

3-(4-Chlorophenyl)-5,5-bis(methylthio)-2-(3-pyridyl)-4-thiazolidinone

A mixture of 10.1 g. of diisopropylamine and 500 ml. of tetrahydrofuran was cooled to a temperature of about 0°C. under a nitrogen atmosphere. There was added to the mixture 45 ml. of a hexane solution of *n*-butyllithium dropwise, with stirring, and the stirring was continued for about 30 minutes after addition was complete. The mixture was then cooled to about —70°C., and a solution of 14.5 g. of 3-(4-chlorophenyl)-2-(3-pyridyl)-4-thiazolidinone (Example 19, *supra*) in 100 ml. of tetrahydrofuran was added dropwise. Thirty minutes after this addition was completed, 9.4 g. of methyldisulfide was added. The reaction mixture was stirred overnight and allowed to gradually warm to ambient room temperature. The reaction mixture was worked up by adding water dropwise, at about room temperature. The organic phase was then extracted with methylene chloride. The methylene chloride layer was washed with dilute aqueous hydrochloric acid. The methylene chloride layer was separated and dried over anhydrous sodium sulfate. The drying agent was filtered off and the filtrate concentrated *in vacuo* to leave a residual oil. The oil was dissolved in toluene and chromatographed over silica gel. Elution was accomplished with toluene: 10% acetone, and a separation was effected so that there was obtained, after concentrating the fractions, a product having a melting point of about 104—106°C., and weighing 1 g., identified as 3-(4-chlorophenyl)-5-(methylthio)-2-(3-pyridyl)-4-thiazolidinone.

Analyses calculated for $C_{15}H_{13}ClN_2OS_2$:

| | Theoretical | Found |
|---|---|---|
| C | 53.48 | 53.40 |
| H | 3.89 | 3.91 |
| N | 8.32 | 8.20 |

A second product having a melting point of about 133—135°C., and weighing 400 mg. was isolated in the same manner and identified as 3-(4-chlorophenyl)-5,5-bis(methylthio)-2-(3-pyridyl)-4-thiazolidinone.

Analyses calculated for $C_{16}H_{15}ClN_2OS_3$:

| | Theoretical | Found |
|---|---|---|
| C | 50.18 | 50.09 |
| H | 3.95 | 3.91 |
| N | 7.32 | 7.08 |

Example 90

3-(4-Chlorophenyl)tetrahydro-2-(3-pyridyl)-4H-1,3-thiazine-4-thione

A suspension was prepared of 10 g. (0.033 moles) of 3-(4-chlorophenyl)tetrahydro-2-(3-pyridyl)-4H-1,3-thiazin-4-one (prepared in Example 70, *supra*) in 30 ml. of dry pyridine, and with mechanical stirring the mixture was heated to about 90°C., forming a solution. To the solution thus formed, and with continued stirring, there was added 1.78 g. (0.008 moles) of phosphorous pentasulfide portionwise over a period of about 10—15 minutes. The solution turned orange in colour. After the addition was completed, the reaction mixture was stirred overnight at a temperature of about 90°C. The then red-colored solution was cooled and the pyridine solvent evaporated *in vacuo*. The viscous oily residue was washed by triturating it with water. The oil was then taken up in a mixture of dimethylformamide and ethanol, decolorized with carbon, filtered, and the ethanol evaporated *in vacuo*. The dimethylformamide solution was poured slowly into cold water, whereby a crude orange solid precipitated. The solid was extracted from the aqueous mixture with ethyl acetate. The extract was washed with cold aqueous sodium chloride solution and the ethyl acetate solution concentrated *in vacuo* to yield a dark red oil. The oil was taken up in a minimum volume of ethyl acetate and chromatographed over a *silica gel* column. There was obtained a red viscous oil which was crystallized from a mixture of ethyl acetate and ether to yield a yellow solid, having a melting point of about 115—117°C., and weighing 3.91 g. The product was identified by elemental analyses as 3-(4-chlorophenyl)tetrahydro-2-(3-pyridyl)-4H-1,3-thiazine-4-thione.

Analyses calculated for $C_{15}H_{13}ClN_2S_2$:

| | Theoretical | Found |
|---|---|---|
| C | 56.15 | 56.10 |
| H | 4.08 | 4.22 |
| N | 8.73 | 8.58 |
| S | 19.99 | 19.94 |

Aquatic growth regulation is practiced by adding the active substituted 1-thia-3-aza-4-one compounds of formula (VI) to the water containing the submerged or floating aquatic weeds. The compounds may be applied to the water as dusts when admixed with a powdered solid carrier such as bentonite, fuller's earth, diatomaceous earth, or various mineral silicates *e.g.*, mica, talc, pyrophyllite, and clays. The compounds may also be mixed with surface-active dispersing agents to form concentrates to facilitate dispersion in water and to improve the wetting properties when used as sprays. If desired, the compounds may be mixed with a powdered solid carrier, together with a surface-active dispersing agent, so that a wettable powder may be obtained which may be applied directly, or which may be shaken with water to make an aqueous dispersion for application in that form. The compounds may be dissolved in an oil, such as a hydrocarbon or chlorinated hydrocarbon oil, and the oil solution of the compound dispersed in water with the aid of a surface-active dispersing agent to give a sprayable aqueous dispersion. Such surface-active dispersing agents may be anionic, nonionic, or cationic surface-active agents. Such surface-active agents are well known, and reference is made to Hoffman *et al.*, U.S. Patent No. 2,614,916, columns 2—4, for detailed examples of the same. The compounds of formula (VI) may also be applied by the aerosol method. Solutions for the aerosol treatment may be prepared by dissolving the compound directly in the aerosol carrier, which is a liquid under pressure, but which is a gas at ordinary temperature (e.g. 20°C.) and atmospheric pressure; or, the aerosol solution may be prepared by first dissolving the compound in a less volatile solvent, and then admixing such solution with the highly volatile liquid aerosol carrier.

To the water containing the submerged and floating weeds a growth-regulating and non-herbicidal amount of one of the compounds of formula (VI) is added, such that a concentration of from 0.25 to 10 ppm. of the active compound is attained.

The optimum concentration of active compound for any specific aquatic weed control problem varies with the temperature, the species to be controlled, and the shape of the body of water to be

treated. At higher water temperatures, less compound is generally required for a given degree of control than is needed at lower temperatures.

In considering the treatment of moving streams for the purpose of controlling flora fixed therein, special account must be taken of the fact that the compounds will pass over the area to be treated and that the concentration during the contact period is dependent upon the water flow rate, the rate of chemical addition, and the period of addition.

The novel aquatic growth regulating method and compositions for use therein are illustrated by the following experiments.

*Trial 1*

The following method was used in the laboratory to evaluate the aquatic growth regulating properties of the compounds disclosed herein, when used at a concentration of 10 ppm, against a representative submerged aquatic weed.

The compounds of formula (VI) used for this test were formulated in the following manner. Twenty mg. of compound was weighed into a 12 ml. disposable vial. To the vial containing the compound were added 1 ml. of acetone and 9 ml. of aqueous 0.1 percent polyoxyethylene sorbitan monooleate (Tween 80) (Tween is a registered Trade Mark). To obtain the test concentration of 10 ppm., 4.00 ml. of this stock solution was added to 785 ml. of water in a plastic container. The plastic containers used were flowerpot-shaped, having a bottom diameter of 9 cm., a top diameter of 11.5 cm., and a height of 13.5 cm.

Terminal pieces of Florida elodes, *Hydrilla verticillata* (L. F.), (hereinafter identified as hydrilla). 10 cm. long without branching, were prepared for testing. Three such cuttings were placed in each plastic container holding 785 ml. of water, to which water the formulated test compound had been added, along with 3 ml. of Hoagland's nutrient solution. Three 10 cm. cuttings of hydrilla were placed in each of several control containers of water. To the water in each control container there was also added the amount of solvent used to formulate the test compound for each container.

After a period of two to three weeks, measurements were made to determine the total length of each plant. an average total growth was obtained by dividing the total combined lengths by the number of replicates. By subtracting 10 cm. from the average total length, the average increase in growth was obtained. This difference was divided by the average increase in length of the plants in the solvent controls (SC) and the quotient multiplied by 100 to give a percent inhibition.

$$\frac{\text{Total combined length of Replicates}}{\text{Number of Replicates}} = \text{Average Length}$$

$$\text{Avg. Length} - 10\text{ cm.} = \text{Avg. Increased Growth}$$

$$\left(1 - \frac{\text{Avg. Increased Growth}}{\text{Avg. Increased Growth SC}}\right) \times 100 = \%\ \text{Inhibition}$$

Each compound employed in this experiment is identified by the number of the previous preparative example.

The results of the tests, run at a concentration of 10 ppm. of compound, and observed at the end of three weeks, are set forth in Table 1, which follows. In the table, the number in column 1 identifies the test compound; column 2 lists the percent growth inhibition of hydrilla observed.

TABLE 1

Substituted 1-Thia-3-aza-4-one Derivatives

| Compound | Approximate % Growth Inhibition |
|---|---|
| 1 | 91 |
| 2 | 78 |
| 3 | 82 |
| 4 | 93 |

TABLE 1, cont'd

Substituted 1-Thia-3-aza-4-one Derivatives

| Compound | Approximate % Growth Inhibition |
|---|---|
| 5 | 97 |
| 6 | 76 |
| 7 | 71 |
| 8 | 99 |
| 9 | 73 |
| 10 | 82 |
| 11 | 75 |
| 12 | 64 |
| 13 | 66 |
| 14 | 74 |
| 15 | 57 |
| [illegible] | 72 |
| 17 | 58 |
| 18 | 88 |
| 20 | 93 |
| 21 | 91 |
| 22 | 85 |
| 23 | 69 |
| 24 | 88 |
| 25 | 100 |
| 26 | 90 |
| 27 | 93 |
| 28 | 97 |
| 29 | 81 |
| 30 | 95 |
| 31 | 93 |
| 32 | 55 |
| 33 | 77 |
| 35 | 49 |

TABLE 1, cont'd

Substituted 1-Thia-3-aza-4-one Derivatives

| Compound | Approximate % Growth Inhibition |
|---|---|
| 36 | 96 |
| 37 | 91 |
| 38 | 86 |
| 39 | 77 |
| 40 | 80 |
| 41 | 79 |
| 42 | 61 |
| 43 | 53 |
| 44 | 95 |
| 45 | 94 |
| 46 | 81 |
| 47 | 86 |
| 48 | 78 |
| 49 | 60 |
| 51 | 64 |
| 52 | 87 |
| 53 | 93 |
| 54 | 95 |
| 55 | 97 |
| 56 | 96 |
| 57 | 87 |
| 58 | 91 |
| 59 | 71 |
| 61 | 77 |
| 64 | 84 |
| 65 | 96 |
| 66 | 99 |
| 67 | 98 |

TABLE 1, cont'd

Substituted 1-Thia-3-aza-4-one Derivatives

| Compound | Approximate % Growth Inhibition |
|---|---|
| 68 | 95 |
| 69 | 95 |
| 70 | 97 |
| 71 | 95 |
| 72 | 86 |
| 73 | 88 |
| 74 | 74 |
| 75 | 96 |
| 76 | 94 |
| 77 | 91 |
| 78 | 86 |
| 79 | 86 |
| 80 | 97 |
| 81 | 91 |
| 82 | 92 |
| 83 | 94 |
| 84 | 69 |
| 85 | 93 |
| 87 | 94 |
| 88 | 89 |
| 89 | 62 |
| 90 | 94 |

*Trial 2*

The general procedure of Trial 1, again employing *Hydrilla verticillata* (L.F.), was repeated using a number of the same formula (VI) compounds. This time test concentrations of 1, 0.5 and 0.25 ppm. were employed.

The test compounds were formulated in the following manner: Twenty mg. of compound was weighed into a 12 ml. disposable vial. To the vial containing the compound were added 1 ml. of acetone and 9 ml. aqueous 0.1 percent polyoxyethylene sorbitan monooleate. This solution was designated as stock solution A.

The 1 ppm. test concentration was obtained as follows: Four ml. of stock solution A was diluted with 36 ml. of aqueous 0.1 percent polyoxyethylene sorbitan monooleate to give stock solution B. Four ml. of stock solution B, when added to 785 ml. water in the plastic test containers, gave a

concentration of test compound of 1 ppm. The plastic test containers were identical to those employed to Trial 1.

The 0.5 ppm. concentration of test compound was obtained as follows: Stock solution B, 20 ml., was diluted with 20 ml. aqueous 0.1 percent polyoxyethylene sorbitran monooleate, and this solution was designated stock solution C. Four ml. of stock solution C was added to 785 ml. of water in the plastic test containers to give a concentration of 0.5 ppm.

The 0.25 ppm concentration of test compound was obtained as follows: Stock solution C, 20 ml., was diluted with 20 ml. aqueous 0.1 percent polyoxyethylene sorbitan monooleate to give stock solution D. This stock solution D, 4 ml., added to 785 ml. of water in the plastic test containers gave a concentration of test compound of 0.25 ppm.

Three weeks after the data of application of the test compounds, measurements were made on the total growth of each plant, as described in Trial 1, and the percent inhibition observed was calculated using the formulas set forth in Trial 1, above. The results are recorded in Table 2, which follows. The test compounds are each identified by the prior preparative examples.

TABLE 2

Substituted 1-Thia-3-aza-4-one Derivatives

| Compound | Approximate % Growth Inhibition at Indicated Test Concentrations | | |
|---|---|---|---|
| | 1 ppm. | 0.5 ppm. | 0.25 ppm. |
| 1 | 63 | 74 | 73 |
| 2 | 64 | 67 | 65 |
| 3 | 72 | 55 | 56 |
| 5 | 83 | 75 | 54 |
| 6 | 50 | 29 | 37 |
| 8 | 71 | 40 | 34 |
| 18 | 67 | 62 | 61 |
| 20 | 63 | 48 | 45 |
| 21 | 61 | 58 | 62 |
| 26 | 67 | 45 | 50 |
| 28 | 66 | 60 | 52 |
| 30 | 52 | 12 | 32 |
| 32 | 73 | 68 | 64 |
| 33 | 63 | 63 | 62 |
| 61 | 59 | 16 | 17 |
| 64 | 46 | 36 | 33 |
| 67 | 61 | 51 | 57 |
| 68 | 64 | 39 | 65 |
| 70 | 63 | 55 | 40 |

Another embodiment of this invention is practiced by applying to the loci of plant pathogenic fungi, fungicidally-effective amounts of one or more of the compounds of generic formulae IV or V. The

compounds are applied in effective amounts, varying somewhat with the severity of the fungus infection and with other factors such as the environment in which the treatment is conducted.

The compositions desirably contain, in addition to the substituted 1-thia-3-aza-4-one antifungal, one or more of a plurality of additaments including water, polyhydroxy compounds, petroleum distillates, and other dispersion media, surface-active dispersing agents, emulsifiers, and finely-divided inert solids. The concentration of the substituted 1-thia-3-aza-4-one anti-fungal in these compositions may vary depending on whether the composition is intended for a direct application to plants or is intended to be subsequently diluted with additional inert carrier such as water to produce the ultimate treating composition.

Treating compositions are most conveniently formulated by preparing liquid or solid concentrates, which are subsequently diluted to the desired level for use. Emulsifiable liquid concentrates can be prepared by incorporating from about 1 to about 10 percent by weight of the active ingredient and an emulsifiable agent in a suitable water-immiscible organic liquid. Such concentrates may be further diluted with water to form spray mixtures in the form of oil-in-water emulsions.

Such spray compositions then comprise active toxicant, water-immiscible solvent, emulsifying agent, and water. Suitable emulsifying agents can be of the nonionic or ionic types, or blends thereof, and include condensation products of alkylene oxides with phenols and organic acids, polyoxyethylene derivatives of sorbitan esters, complex ether alcohols and ionics of the arylalkyl sulfonate type. Suitable water-immiscible organic liquids to be employed include aromatic hydrocarbons, aliphatic hydrocarbons, cycloaliphatic hydrocarbons, and mixtures thereof such as petroleum distillates.

Solid concentrate mixtures can be prepared by incorporating from about 10 to about 50% by weight of the substituted 1-thia-3-aza-4-one compound in a finely-divided solid carrier such as bentonite, fuller's earch, diatomaceous earth, hydrated silica, diatomaceous silica, expanded mica, talc and chalk. Such concentrates can be formulated, if desired, for direct use as dusting compositions, or can be diluted, if desired, with additional inert solid carriers to produce dusting powders containing around 0.05 to 1% by weight of the substituted 1-thia-3-aza-4-one. Alternatively, the surfactants, that is, dispersing and/or wetting agents, can be incorporated along with the substituted 1-thia-3-aza-4-one in the solid carier to form wettable powder concentrates ranging from about 10 to about 25% by weight concentration, which subsequently can be dispersed in water or other hydroxylated carrier to form spray compositions. Suitable surfactants include condensed aryl sulfonic acids and sodium salts thereof, sodium lignosulfate, sulfonate-oxide condensate blends, alkylaryl polyether alcohols, sulfonate/nonionic blends and anionic wetting agents.

Further, the substituted 1-thia-3-aza-4-one toxicant can be incorporated in solutions, simple dispersions, aerosol formulations, and other media acceptable to be employed for treating vegetation or applying to the soil.

The antifungal composition is applied to infected or susceptible plant surfaces in any convenient fashion such as by spraying, dusting, dipping, or drenching. A spray method is considered preferable, especially when large numbers of plants are involved, because of the rapidity and uniformity of treatment possible. In spraying it is usually sufficient for the infected or susceptible surfaces to be thoroughly wet with the liquid dispersion employed. Good results have been obtained by employing spray compositions whether they be emulsions or aqueous dispersions of solid concentrates.

Where the fungi to be controlled are in the soil, the antifungal compounds can be applied to the soil directly, or they can be diluted with various inert solid or liquid diluents, as described above, and then applied to the fungus-infested area. In one method of application to the soil, the soil surface is sprayed with a liquid dispersion or emulsion of the active ingredient. The application is allowed to remain as a coating on the surface of the soil, or alternatively, incorporated into the soil by disking, hoeing, or other methods well known to those skilled in the art. Another method of application is to apply the active ingredient, in the form of a liquid dispersion or emulsion, to the soil as a drench. Thus, for the control of soil-inhabiting fungi in the greenhouse, the application rate varies from about 5 to about 200 ppm. active ingredient. When an acid addition salt of a 1-thia-3-aza-4-one base is used, the rate of application will, of course, depend on the amount of base actually present. The salts themselves are employed chiefly for ease of handling and formulating.

The fungicidally-active compounds of formulae (IV) and (V) have also been found effective when utilized as a seed soak for seeds prior to planting. Thus, where a fungicidal compound is applied as a seed soak, a seed soak formulation is prepared containing the fungicidal compounds, together with other excipients such as a mixture of ethanol-acetone or polyoxyethylene sorbitan monooleate. When a compound of formula (IV) or (V) is utilized as a seed soak, satisfactory control has been accomplished at an application rate of from about 50 to about 400 ppm. of the fungicidal substituted 1-thia-3-aza-4-one compound. The seeds are allowed to soak in the formulation for a period of up to about 4 hours. The seeds are then removed and planted.

The use of the compounds of formula (IV) or (V), and acid addition salts thereof, as plant fungicidal agents, is illustrated by the following procedure.

*Trial 3*

The evaluation of the effectiveness as a soil drench of some of the compounds of formula (IV) or

(V) against *Erysiphe cichoracearum,* the causative organism of cucumber powdery mildew, was accomplished in the greenhouse in the following manner.

Fungicidal compositions were prepared by dissolving the compound of formula (IV) or (V) in a 1:1 mixture of ethanol:acetone containing polyoxyethylene sorbitan monolaurate (Tween 20) and diluting with deionized water to a final concentration of 1% solvent and 0.1% surfactant. The most concentrated fungicidal composition was prepared first, that is, the one containing the highest concentration of active ingredient. The other fungicidal compositions containing lower concentrations of the active ingredient were then prepared by serial dilution technique from the highest concentration composition. A solvent-surfactant blank was used as a control.

Five cucumber seeds (*Cucumis sativus* L., variety "Green Prolific") were planted in 4-inch square plastic pots containing soil and covered with sand. After the seeds had sprouted, the plants were thinned to 2 per pot. On day 15 after the seed was planted, 1 pot for each concentration of each test compound was soil drenched with 50 ml. of the formulated test compound. The pots containing the plants were then placed in the greenhouse and the leaves of the plants were inoculated by dusting them with conidia from infested cucumber plants. On day 23 after planting, the plants were observed to determine the incidence of cucumber powdery mildew on the cucumber plants. The results of the tests are recorded in Table 3, which follows. In the table, 0 percent = no powdery mildew incidence (infection). The compound column refers to the prior preparative example.

TABLE 3

| Compound | Appln. Rate ppm | Percent Incidence Powdery Mildew Infection on Cucumber |
|---|---|---|
| 1 | 1 | 40 |
| | 5 | 5 |
| | 20 | 0 |
| | 25 | 0 |
| | 100 | 0 |
| 2 | 5 | 0 |
| | 20 | 0 |
| | 100 | 0 |
| 3 | 1 | 40 |
| | 5 | 0 |
| | 10 | 0 |
| | 20 | 0 |
| 7 | 5 | 70 |
| | 20 | 55 |
| | 100 | 0 |
| 9 | 5 | 15 |
| | 20 | 15 |
| | 100 | 0 |
| | 200 | 0 |
| 10 | 10 | 60 |

TABLE 3 continued

| Compound | Appln. Rate ppm | Percent Incidence Powdery Mildew Infection on Cucumber |
|---|---|---|
| 10 | 20 | 50 |
| | 40 | 0 |
| | 80 | 0 |
| 11 | 5 | 0 |
| | 20 | 0 |
| | 100 | 0 |
| | 200 | 0 |
| 13 | 5 | 60 |
| | 20 | 25 |
| | 100 | 0 |
| | 200 | 0 |
| 20 | 20 | 10 |
| | 100 | 0 |
| 21 | 1 | 5 |
| | 5 | 0 |
| | 10 | 0 |
| 22 | 20 | 60 |
| | 100 | 0 |
| 23 | 20 | 65 |
| | 100 | 0 |
| 24 | 20 | 50 |
| | 100 | 0 |
| 34 | 5 | 80 |
| | 20 | 70 |
| | 100 | 0 |
| | 200 | 0 |
| 50 | 5 | 80 |
| | 20 | 20 |
| | 100 | 0 |

TABLE 3 continued

| Compound | Appln. Rate ppm | Percent Incidence Powdery Mildew Infection on Cucumber |
|---|---|---|
| 50 | 200 | 0 |
| 88 | 20 | 0 |
| | 200 | 0 |
| Control | 0 | 70—95 |

*Trial 4*

A test to establish the efficacy of selected compounds of formula (IV) or (V) as fungicides in the control of *Erysiphe graminis tritici,* the causative organism of powdery mildew of wheat, was carried out in the greenhouse in the following manner.

Fungicidal compositions were prepared in the same manner as described in Experiment 3.

Thirty to forty wheat seeds (variety Monon) were planted in 4-inch square plastic pots containing soil and covered with sand. After about 6 to 8 days, when the seedlings are 4—6 inches tall, 1 pot was soil drenched with a volume of the formulated test chemical. The plants were then placed in the greenhouse and the leaves were inoculated by dusting them with conidia from infested wheat plants. About 14 to 16 days after planting the plants were observed to determine the percent incidence of the wheat powdery mildew on the wheat plants. The results are recorded in Table 4, which follows. In the table, 0 percent = no powdery mildew incidence (infection). The compound column refers to the prior preparative examples.

TABLE 4

| Compound | Appln. Rate ppm | Percent Incidence Powdery Mildew on Wheat |
|---|---|---|
| 1 | 1 | 60 |
| | 5 | 20 |
| | 20 | 0 |
| | 25 | 0 |
| | 100 | 0 |
| 9 | 5 | 60 |
| | 20 | 25 |
| | 100 | 0 |
| | 200 | 0 |
| 10 | 5 | 60 |
| | 20 | 45 |
| | 100 | 0 |
| 11 | 5 | 40 |
| | 20 | 0 |
| | 100 | 0 |

TABLE 4 continued

| Compound | Appln. Rate ppm | Percent Incidence Powdery Mildew on Wheat |
|---|---|---|
| 11 | 200 | 0 |
| 16 | 5 | 60 |
| | 20 | 55 |
| | 100 | 5 |
| | 200 | 0 |
| 34 | 5 | 70 |
| | 20 | 70 |
| | 100 | 10 |
| | 200 | 5 |
| 61 | 400 | 0 |
| 62 | 400 | 0 |
| | 100 | 0 |
| | 25 | 25 |
| Control | 0 | 60—80 |

*Trial 5*

The evaluation of the effectiveness of some of the compounds of formula (IV) or (V) against *Erysiphe graminis hordei*, the causative organism of powdery mildew of barley, was accomplished in the greenhouse in the same manner as that described in Experiment 4. The results are recorded in Table 5, which follows. The compound column refers to the prior preparation example.

TABLE 5

| Compound | Appln. Rate ppm | Percent Incidence Powdery Mildew on Barley |
|---|---|---|
| 2 | 5 | 0 |
| | 20 | 0 |
| | 40 | 0 |
| | 80 | 0 |
| | 100 | 0 |
| 3 | 20 | 0 |
| | 40 | 0 |
| | 80 | 0 |
| 21 | 20 | 0 |

TABLE 5 continued

| Compound | Appln. Rate ppm | Percent Incidence Powdery Mildew on Barley |
|---|---|---|
| 21 | 40 | 0 |
| | 80 | 0 |
| Control | 0 | 60—75 |

*Trial 6*

The further evaluation of the effectiveness of some of the compounds of formula (IV) or (V) against the powdery mildew disease of barley was carried out in the greenhouse in the following manner.

Fungicidal compositions were prepared by dissolving the compound to be tested in 2% ethanol:acetone (1:1) plus 0.1% polyoxyethylene sorbitan monolaurate in deionized water. Each test compound was prepared in concentrations of 200, 400 and 800 ppm. Five milliliters of each concentration was sprayed onto 3 cups of soil in a tumbler to thoroughly incorporate the compound. This resulted in rates of 1,2 and 4 mg./3 cups of soil, respectively. In plastic pots measuring 20.32 cm. in diameter and 25.4 cm. in depth, there was placed 5 cups of untreated greenhouse soil. The 3 cups of treated soil was used to fill the top 6 cm. of each pot. Twenty seeds of Larker variety barley were planted in the treated soil at a depth of 1 cm. The pots were top watered as needed. When the plants were 6 days old, all the plants were inoculated with powdery mildew conidia from infected plants.

Beginning 12 days after planting (DAP), the plants were observed for the incidence of powdery mildew. The observed results were recorded and are shown in Table 6, which follows. In the table, 0% = no powdery mildew incidence and thus 100% control. The compound column refers to the prior preparative examples.

TABLE 6

| | Appln. rate | Powdery Mildew Incidence On Barley at DAP | | | |
|---|---|---|---|---|---|
| Compound | kg./ha. | 12 | 15 | 19 | 25 |
| 2 | 0.28 | 0 | 0 | 2 | 10 |
| | 0.56 | 0 | 0 | 0 | 2 |
| | 1.12 | 0 | 0 | 0 | 2 |
| 3 | 0.28 | 50 | 60 | 70 | 75 |
| | 0.56 | 5 | 10 | 20 | 30 |
| | 1.12 | 0 | 2 | 10 | 20 |
| 12 | 0.28 | 60 | 75 | 80 | 85 |
| | 0.56 | 2 | 5 | 15 | 20 |
| | 1.12 | 0 | 0 | 2 | 10 |
| 19 | 0.28 | 2 | 5 | 20 | 30 |
| | 0.56 | 0 | 0 | 5 | 15 |
| | 1.12 | 0 | 0 | 2 | 10 |
| 24 | 0.28 | 55 | 60 | 70 | 80 |
| | 0.56 | 25 | 30 | 35 | 45 |
| | 1.12 | 5 | 10 | 20 | 30 |
| Control | 0 | 60 | 75 | 80 | 90 |

*Trial 7*

The efficacy of the compounds of formula (IV) or (V) against the causative organisms of four fungal diseases of wheat was determined in the greenhouse by foliar and soil drench application of the test compounds according to the following procedure.

Wheat, variety Monon, was planted in round plastic pots measuring 6.25 cm. in diameter, containing soil covered with sand. Two pots per disease, together with 4 check pots per disease were prepared, for a total of 24 pots. When the seedlings were about 4—5 inches tall, that is, at about 5—7 days after planting the seeds, depending on the time of year the test was run, the plants in each of two test pots were sprayed with a single formulated test compound (application rate of 400 ppm. a.i.), while the soil in each of two other test pots was drenched with 10 ml. per pot of the same formulated test compound (application rate 12.32 kg./ha.). This procedure was carried out for each formulated test compound, employing two pots each test compound for the spray application and two pots each for the soil drench application for each disease. As checks in each disease test, the plants in two check pots were sprayed with the water-diluted solvent-emulsifier solution, and the soil in two more check pots was drenched with the water-diluted solvent-emulsifier solution, for a total of four check pots for each disease.

Within 24 hours after application of the formulated test compounds and the solvent-surfactant solution as described above, all the pots were placed in the greenhouse and inoculated respectively with the conidia of the test organisms. The plants were then observed at 4—8 days after transfer to the greenhouse for symptoms of the diseases and the disease ratings recorded.

The disease ratings are as follows:

1 — Severe
2 — Moderately Severe
3 — Moderate
4 — Slight
5 — No Disease (100% control)

The test organisms were the following:

Helminthosporium Leaf Spot (H)
(*Helminthosporium sativum*)
Leaf Rust (LR)
(*Puccinia recondita trilici*)
Powdery mildew (PM)
(*Erysiphe graminis tritici*)
Septoria Leaf Blotch (S)
(*Septoria tritici*)

The results are set forth in Table 7, which follows, the compounds being identified by the numbers of their preparative examples.

TABLE 7

Disease Control Ratings

| Compound | Appln. Rate ppm. | Foliar Application | | | | Appln. Rate kg./ha. | Soil Drench | | | |
|---|---|---|---|---|---|---|---|---|---|---|
| | | PM | LR | H | S | | PM | LR | H | S |
| 19 | 400 | 4 | – | – | – | – | – | – | – | – |
| 26 | 400 | 5 | 1 | 3 | 5 | 12.32 | 5 | 3 | 3 | 4 |
| 27 | 400 | 1 | 1 | 4 | 5 | 12.32 | 4 | 1 | 1 | 5 |
| 28 | 400 | 4 | 1 | 1 | 4 | 12.32 | 4 | 1 | 1 | 4 |
| 29 | 400 | 5 | 1 | 5 | 5 | 12.32 | 5 | 5 | 5 | 5 |
| 32 | 400 | 5 | 1 | 5 | 5 | 12.32 | 4 | 5 | 1 | 5 |
| 33 | 400 | 4 | 1 | 4 | 1 | 12.32 | 5 | 4 | 1 | 5 |
| 46 | 400 | 5 | 1 | 4 | 4 | 12.32 | 5 | 5 | 5 | 4 |
| 53 | 400 | 4 | 1 | 4 | 5 | 12.32 | 5 | 4 | 4 | 4 |
| 62 | 400 | 5 | 5 | 4 | 5 | – | – | – | – | – |
| 62 | 100 | 3 | – | 3 | 3 | – | – | – | – | – |
| 65 | 400 | 5 | 1 | 5 | 1 | 12.32 | 5 | 4 | 1 | 4 |
| 66 | 400 | 5 | 1 | 1 | 5 | 12.32 | 1 | 1 | 1 | 1 |

TABLE 7 (Continued)

Disease Control Ratings

| Compound | Appln. Rate ppm. | Foliar Application | | | | Appln. Rate kg./ha. | Soil Drench | | | |
|---|---|---|---|---|---|---|---|---|---|---|
| | | PM | LR | H | S | | PM | LR | H | S |
| 69 | 400 | 4 | 3 | 4 | 4 | 12.32 | 4 | 1 | 1 | 1 |
| 76 | 400 | 3 | 1 | 5 | 4 | 12.32 | 5 | 3 | 1 | 5 |
| 78 | 400 | 4 | 1 | 3 | 4 | 12.32 | 5 | 3 | 1 | 5 |
| 79 | 400 | 5 | 1 | 1 | 1 | 12.32 | 5 | 1 | 1 | 4 |
| 86 | 400 | 4 | 4 | 5 | 4 | 12.32 | 5 | 5 | 1 | 4 |
| 88 | 400 | 4 | 1 | 3 | 1 | — | — | — | — | — |
| 89 | 400 | 4 | 1 | 1 | 1 | — | — | — | — | — |
| 90 | 400 | 5 | 1 | 4 | 4 | 12.32 | 5 | 1 | 1 | 1 |
| Control | 0 | 1 | 1 | 1 | 1 | 0.0 | 1 | 1 | 1 | 1 |

*Trial 8*

Following the same general testing procedure as described in Trial 7, additional testing of the efficacy of the compounds of Trial 7 was accomplished at the same application rates, as well as at lower application rates. The results are recorded in Table 8.

TABLE 8

Disease Control Ratings

| Compound | Appln. Rate ppm. | Foliar Application PM | LR | H | S | Appln. Rate kg. /ha. | Soil Drench PM | LR | H | S |
|---|---|---|---|---|---|---|---|---|---|---|
| 26 | 400 | 5 | – | 4 | 4 | – | Not Tested | | | |
| | 100 | 5 | – | 1 | 1 | – | | | | |
| | 25 | 4 | – | 1 | 1 | – | | | | |
| 27 | 400 | – | – | 4 | 5 | – | | | | |
| | 100 | – | – | 1 | 3 | – | | | | |
| | 25 | – | – | 1 | 1 | – | | | | |
| 28 | 400 | 5 | – | – | 4 | 12.32 | 5 | – | – | 5 |
| | 100 | 4 | – | – | 2.5 | 3.36 | 2.5 | – | – | 3 |
| | 25 | 2.5 | – | – | 1 | 0.78 | 1 | – | – | 1 |
| 29 | 400 | 5 | – | 4 | 5 | 12.32 | 5 | 5 | 3 | 5 |
| | 100 | 4 | – | 3.5 | 3 | 3.36 | 5 | 5 | 1 | 4.5 |
| | 25 | 4 | – | 2 | 2.5 | 0.78 | 4 | 1 | 1 | 2.5 |

TABLE 8 (Continued)

Disease Control Ratings

| Compound | Appln. Rate ppm. | Foliar Application | | | | Appln. Rate kg./ha. | Soil Drench | | | |
|---|---|---|---|---|---|---|---|---|---|---|
| | | PM | LR | H | S | | PM | LR | H | S |
| 32 | 400 | 5 | 1 | 3 | 5 | 12.32 | 5 | 4 | – | 4 |
| | 100 | 4.5 | 1 | 1 | 4 | 3.36 | 5 | 1 | – | 4 |
| | 25 | 3.5 | 1 | 1 | 2.5 | 0.78 | 4.5 | 1 | – | 1 |
| 33 | 400 | 4 | – | 5 | – | 12.32 | 5 | 4 | – | 5 |
| | 100 | 4.5 | – | 4.5 | – | 3.36 | 5 | 3 | – | 5 |
| | 25 | 3.5 | – | 3 | – | 0.78 | 3 | 1 | – | 1 |
| 46 | 400 | 5 | – | 5 | 4 | 12.32 | 5 | – | 3 | 5 |
| | 100 | 5 | – | 4 | 4 | 3.36 | 5 | – | 1 | 4 |
| | 25 | 4.5 | – | 3 | 1 | 0.78 | 5 | – | 1 | 1 |
| | 6 | 3 | – | 1 | – | 0.22 | 3 | – | – | – |
| 53 | 400 | 4 | – | 5 | 5 | 12.32 | 5 | – | 4 | 4 |
| | 100 | 4 | – | 4 | 4 | 3.36 | 5 | – | 1 | 1 |
| | 25 | 3.5 | – | 1 | 4 | 0.78 | 3.5 | – | 1 | 1 |
| | 6 | 3 | – | 1 | 3 | 0.22 | 1 | – | 0 | 0 |

TABLE 8 (Continued)

Disease Control Ratings

| Compound | Appln. Rate ppm. | Foliar Application | | | | Appln. Rate kg./ha. | Soil Drench | | | |
|---|---|---|---|---|---|---|---|---|---|---|
| | | PM | LR | H | S | | PM | LR | H | S |
| 69 | 400 | 1 | 3 | 5 | 5 | 12.32 | 4 | 1 | – | – |
| | 100 | 1 | 1 | 4 | 4 | 3.36 | 4 | 1 | – | – |
| | 25 | 1 | 1 | 1 | 1 | 0.78 | 1 | 1 | – | – |
| Control | 0 | 1 | 1 | 1 | 1 | 0.0 | 1 | 1 | – | – |

*Trial 9*

The terrestrial plant growth regulator activity of the compounds of formula (VI) was determined in the greenhouse according to the following procedure.

The plants used in this study were soybean, variety Chippewa; barley, variety Larker; ryegrass, variety Manhattan; and cucumber, variety Green Prolific. All plants were grown in soil in 10 cm. plastic pots. The soil in one-half of the number of pots was covered with vermiculite after the seeds were sown, and those pots used for a foliar spray application of the test compounds. The soil in the other half of the number of pots was covered with soil after the seeds were planted, and those pots used for a soil drench application of the test compounds. The seedling plants were fertilized bi-weekly until termination of the test with a solution containing 6.7 g. of Rapid-Gro (a commercially-available fertilizer) per gallon. After the plants became established, and before the treatment date, the plants in each pot were thinned to the desired number of plants per pot. Thus, there were two soybean plants per pot, five barley plants per pot, an estimated 100 ryegrass plants per pot, and one cucumber plant per pot. The ryegrass was clipped to a height of 2.5 cm. on the day before treatment.

The plants in one-half the number of pots were treated with a soil drench at the rate of 5.6 kg./ha. of test compound. The plants in the other one-half the number of pots were treated with a foliar spray at an application rate of 2000 ppm. The foliar spray applications were made with a DeVilbiss atomizer at 10—12 psi., the foliage of all the plants being sprayed to wetness.

The test compounds were formulated in the following manner. A solution was prepared of 50 mg. of the test compound in 3 ml. of a mixture of ethanol and acetone (1:1 by volume), and diluted to a total volume of 25 ml. with Toximul R and S water (300 ppm Toximul R and 400 ppm Toximul S in deionized water). [Toximul R and Toximul S are general purpose matched pair emulsifiers and are a liquid sulfonate/nonionic blend produced by Stepan Chemical Company, Northfield, Illinois, U.S.A.] Fourteen ml. of the solution was used for the foliar application. For the soil drench, 11 ml. was diluted to 100 ml., with a 20 ml. aliquot then being poured into each pot. The age of the plants at time of treatment varied as follows:

Soybean — 16 days
Barley — 7 days
Ryegrass — 10 days
Cucumber — 17 days

After treatment, the soybean and ryegrass were maintained in the greenhouse for 15 days, at the end of which time visual evaluations were made of growth regulator effects and injury. The barley and cucumber plants were maintained in the greenhouse for 20 days, at the end of which time the visual evaluations of growth regulator effects and injury were made. A scale of 0, 1, 2, and 3 was used. Zero is no effect and 3 is distinct or severe effects. A "+" is used for growth promotion, while a "—" indicates inhibition or depression. The results are set forth in Table 10. The compound column refers to the prior preparative examples.

TABLE 9

Plant Growth Regulator Effects

| Compound | Appln. Rate | Treatment | Soybean H | Soybean BR | Soybean I[1/] | Cucumber H | Cucumber F | Cucumber I[1/] |
|---|---|---|---|---|---|---|---|---|
| 1 | 2000 ppm. | Foliar | 0 | 0 | 0 | 0 | 0 | 0 |
| | 5.6 kg./ha. | Drench | 0 | 0 | 0 | 0 | 0 | 0 |
| 26 | 2000 ppm. | Foliar | –1 | 0 | 1M[2/] | 0 | 0 | 0 |
| | 5.6 kg./ha. | Drench | 0 | 0 | 0 | 0 | 0 | 0 |
| 32 | 2000 ppm. | Foliar | –1 | 0 | 2M | –1 | 0 | 0 |
| | 5.6 kg./ha. | Drench | –2 | 0 | 0 | 0 | 0 | 0 |
| Control | 0 | Foliar | 0 | 0 | 0 | 0 | 0 | 0 |
| | | Drench | 0 | 0 | 0 | 0 | 0 | 0 |

1/ H = height; BR = branching; I = injury; F = flowering; T = tillering; M = morphological effects; B = burn; C = chlorosis.

TABLE 9 (Continued)

Plant Growth Regulator Effects

| | | | Barley | | | | Ryegrass | | |
|---|---|---|---|---|---|---|---|---|---|
| Compound | Appln. Rate | Treatment | H | T | F | I [1/] | H | T | I [1/] |
| 1 | 2000 ppm. | Foliar | 0 | 0 | 0 | 0 | 0 | 0 | 0 |
| | 5.6 kg./ha. | Drench | –3 | 0 | –3 | 2CB | –1 | 0 | 0 |
| 26 | 2000 ppm. | Foliar | 0 | 0 | 0 | 0 | 0 | 0 | 0 |
| | 5.6 kg./ha. | Drench | –3 | 0 | –3 | 2C | –1 | 0 | 1B |
| 32 | 2000 ppm. | Foliar | –1 | 0 | 0 | 0 | 0 | 0 | 0 |
| | 5.6 kg./ha. | Drench | –3 | 0 | –3 | 2BC | –1 | 0 | 1B |
| Control | 0 | Foliar | 0 | 0 | 0 | 0 | 0 | 0 | 0 |
| | | Drench | 0 | 0 | 0 | 0 | 0 | 0 | 0 |

1/ H = height; BR = branching; I = injury; F = flowering; T = tillering; M = morphological effects; B = burn; C = chlorosis.

The results obtained in the experiments described and reported above show the novel substituted 1-thia-3-aza-4-one derivatives of formula (I) disclosed herein are effective in the disclosed and claimed methods of regulating the growth of submerged and floating aquatic plants, of protecting plants from phytopathogenic fungi, and of regulating the growth of terrestrial plants such as wheat and barley.

## Claims

1. A compound of the formula

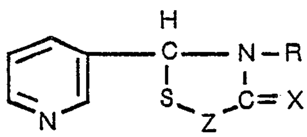

(I)

wherein

R is $C_3$—$C_{10}$ alkyl, $C_3$—$C_8$ cycloalkyl, methallyl, phenyl, halophenyl, trifluoromethylphenyl, benzyl, methoxybenzyl, methylbenzyl, halobenzyl, dimethylaminoethyl, methylcyclohexyl, $C_3$—$C_8$ cycloalkyl-($C_1$—$C_3$)-alkyl, $\alpha$-methylbenzyl, 2-thiazolyl, nitrophenyl, phenoxyphenyl, (tetrahydro-2-furanyl)methyl, haloanilyl, trifluoromethylthiophenyl, methylthiophenyl, 2-norbornyl, furfuryl, 2-(1-methoxypropyl), methoxyphenyl, fluoro($C_1$—$C_2$)alkoxyphenyl, 3,4-(methylenedioxy) benzyl, xylyl, biphenylyl, tolyl, or halotolyl;

X is oxygen or sulfur;

Z is

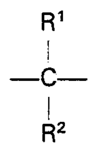 or 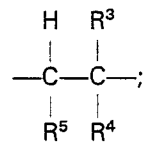;

$R^1$ is hydrogen, methyl, or —S($C_1$—$C_6$ alkyl);
$R^2$ is hydrogen, $C_1$—$C_6$ alkyl, or —S($C_1$—$C_6$ alkyl);
$R^3$ is hydrogen or methyl;
$R^4$ is hydrogen or $C_1$—$C_6$ alkyl; and
$R^5$ is hydrogen or methyl; and provided that when X is oxygen and Z is

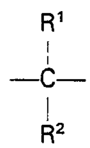

and $R^1$ and $R^2$ are both hydrogen or one of $R^1$ and $R^2$ is hydrogen and the other is methyl, R is not phenyl or halophenyl.

2. A compound of Claim 1 of the formula

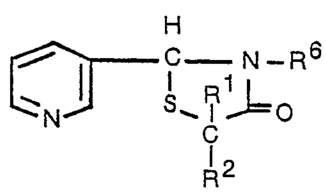

(II)

wherein

$R^1$ is hydrogen, methyl, or —S($C_1$—$C_6$ alkyl);
$R_2$ is hydrogen, $C_1$—$C_6$ alkyl, or —S($C_1$—$C_6$ alkyl); and
$R_6$ is $C_3$—$C_{10}$ alkyl, $C_3$—$C_8$ cycloalkyl, methallyl, halophenyl, phenyl, fluoro($C_1$—$C_2$)alkoxyphenyl, nitrophenyl, tolyl, methoxyphenyl, furfuryl, 3,4-(methylenedioxy) benzyl, (tetrahydro-2-furanyl)methyl, trifluoromethylphenyl, methylcyclohexyl, $C_3$—$C_8$ cycloalkyl($C_1$—$C_3$)alkyl, biphenylyl, phenoxyphenyl, 2-norbornyl, halobenzyl, 2-thiazolyl, trifluoromethylthiophenyl, halotolyl, or methylthiophenyl; and provided that when $R^1$ and $R^2$ are both hydrogen or one of $R^1$ and $R^2$ is hydrogen and the other is methyl, $R^6$ is not phenyl or halophenyl.

3. A compound according to claim 2 wherein $R^6$ is $C_3$—$C_{10}$ alkyl, $C_3$—$C_8$ cycloalkyl, methallyl, furfuryl, 3,4-(methylenedioxy)benzyl, (tetrahydro-2-furanyl) methyl, methylcyclohexyl, $C_3$—$C_8$ cycloalkyl ($C_1$—$C_3$) alkyl, 2-norbornyl, halobenzyl or 2-thiazolyl.

4. A compound of the formula

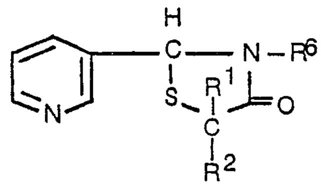

(II)

wherein $R^1$ and $R^2$ are as defined in claim 1 and $R^6$ is *o*-chlorophenyl, *p*-fluorophenyl, *p*-bromophenyl, *p*-iodophenyl, *m*-chlorophenyl, *o*-bromophenyl, *o*-fluorophenyl, 2,4-difluorophenyl, 2,5-dichlorophenyl-2,5-dibromophenyl, 2-bromo-4-chlorophenyl, 2,4-dibromophenyl, 3,4-difluorophenyl, 4-bromo-2-chlorophenyl, 4-bromo-3-fluorophenyl, 3,4-dichlorophenyl, 3,4-dibromophenyl, 4-chloro-3-fluorophenyl, 3,5-difluorophenyl, 3,5-dichlorophenyl, 3,5-dibromophenyl, 2,3,4-trichlorophenyl, 2,4,5-trichlorophenyl or 2,3,4,5-tetrachlorophenyl.

5. A compound of Claim 1 of the formula

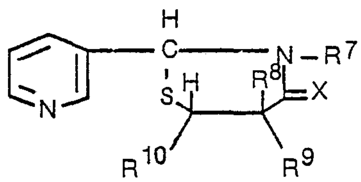

(III)

wherein

X is oxygen or sulfur;

$R^7$ is $C_5$—$C_6$ alkyl, $C_5$—$C_6$ cycloalkyl, halobenzyl, xylyl, halophenyl, methylthiophenyl, tolyl, halotolyl, trifluoromethylphenyl, 1-(2-cyclopenyl-1-methyl)ethyl, or methoxyphenyl;

$R^8$ is hydrogen or methyl; and

$R^9$ and $R^{10}$ are the same or different and are hydrogen or methyl.

6. 3-(4-Chlorophenyl)-5-methyl-2-(3-pyridyl)-4-thiazolidinone.

7. 3-(4-Chlorobenzyl)-2-(3-pyridyl)-4-thiazolidinone.

8. 3-Cyclohexyl-5-methyl-2-(3-pyridyl)-4-thiazolidinone.

9. 3-(2-Cyclopentyl-1-methyl)ethyl-5-methyl-2-(3-pyridyl)-4-thiazolidinone.

10. 3-(4-Chlorophenyl)-5,5-dimethyl-2-(3-pyridyl)-4-thiazolidinone.

11. 3-(4-Chlorophenyl)-5-(*n*-butyl)-5-methyl-2-(3-pyridyl)-4-thiazolidinone.

12. 3-[(4-Chlorophenyl)methyl]tetrahydro-2-(3-pyridyl)-4H-1,3-thiazin-4-one.

13. 3-[(2-Cyclopentyl-1-methyl)ethyl]tetrahydro-2-(3-pyridyl)-4H-1,3-thiazin-4-one.

14. 3-(4-Chlorophenyl)tetrahydro-5-methyl-2-(3-pyridyl)-4H-1,3-thiazin-4-one, or

15. 3-(3,4-Dimethylphenyl)tetrahydro-2-(3-pyridyl)-4H-1,3-thiazin-4-one.

16. A process for preparing the 4-thiazolidinone compounds of the formula

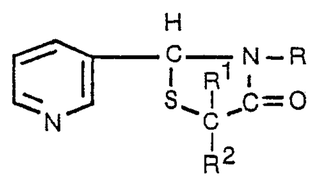

(VII)

wherein R, $R^1$ and $R^2$ are as defined in claim 1 provided that at least one of $R^1$ and $R^2$ is other than hydrogen and that when one of $R^1$ and $R^2$ is hydrogen and the other is methyl, R is not phenyl or halophenyl, which comprises reacting a compound of formula (VII) wherein $R^1$ or $R^2$ is hydrogen with an alkylating agent.

17. A process for preparing compounds of the formula

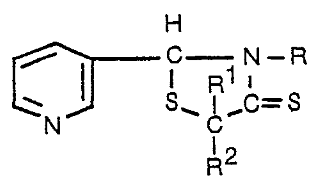

wherein R, $R^1$ and $R^2$ are as defined in claim 1 which comprises reacting a compound of the formula

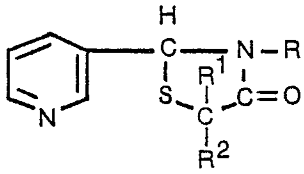

(VII)

with $P_2S_5$.

18. A process for preparing the 4-thiazolidinone compounds of the formula

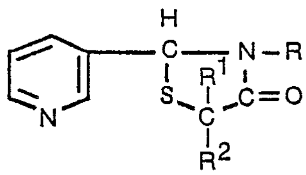

(VII)

wherein R, $R^1$ and $R^2$ are as defined in claim 1 provided that when $R^1$ and $R^2$ are both hydrogen or one of $R^1$ and $R^2$ is hydrogen and the other is methyl, R is not phenyl or halophenyl, which comprises reacting 3-pyridylcarboxaldehyde of the formula

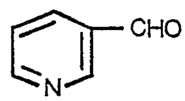

with a substituted amine of the formula

$$R—NH_2$$

wherein R is as defined in claim 1 and $R—NH_2$ is a sterically hindered amine, in the presence of a cyclizing agent, followed by reacting with thioglycolic acid or thiolactic acid.

19. A process for preparing the thiazinone compounds of the formula

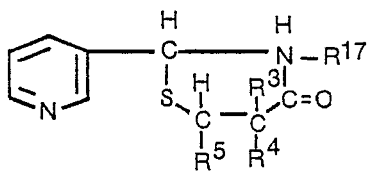

(VIII)

wherein

$R^3$, $R^4$ and $R^5$ are defined as in Claim 1,

$R^{17}$ is $C_3$—$C_{10}$ alkyl, $C_5$—$C_6$ cycloalkyl, $C_3$—$C_8$ cycloalkyl($C_1$—$C_3$)alkyl, halophenyl, trifluoromethylphenyl, halobenzyl, haloanilyl, methoxyphenyl, xylyl, tolyl, or methylthiophenyl, which comprises reacting a compound of the formula

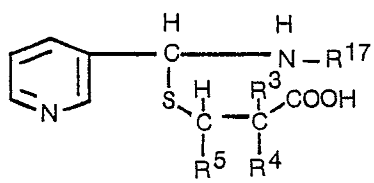

wherein $R^3$, $R^4$, $R^5$ and $R^{17}$ are defined as before, with a cyclizing agent.

20. A process of Claim 19 which comprises further reacting the compounds of formula (VIII) when $R^3$ or $R^4$ is hydrogen or when $R^3$ is methyl and $R^4$ is $C_1$—$C_6$ alkyl and $R^5$ is hydrogen with an alkylating agent to provide the compounds of formula (VIII) where either $R^3$ is methyl or $R^4$ is $C_1$—$C_6$ alkyl, or where $R^3$ is methyl and $R^4$ is $C_1$—$C_6$ alkyl, then $R^5$ is methyl.

21. A process of Claim 19 which comprises further reacting the compounds of formula (VIII) with $P_2S_5$ to provide the compounds of formula (I) as defined in Claim 1 wherein X is sulfur.

22. A composition for use in agriculture which comprises as active ingredient a compound of formula (I) as defined in Claim 1 and an agriculturally-acceptable excipient.

23. A fungicidal composition of Claim 22 which comprises as active ingredient a compound of the formula

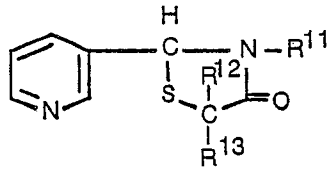

(IV)

wherein

$R^{11}$ is $C_3$—$C_{10}$ alkyl, phenyl, halophenyl, methallyl, $C_3$—$C_8$ cycloalkyl, nitrophenyl, methylcyclohexyl, fluoro($C_1$—$C_2$)alkoxyphenyl, tolyl, xylyl, methoxyphenyl, trifluoromethylphenyl, halotolyl, halobenzyl, 3,4-(methylenedioxy)phenyl, or biphenylyl;

$R^{12}$ is hydrogen or methyl;

$R^{13}$ is hydrogen or $C_1$—$C_6$ alkyl, and provided that when $R^{12}$ and $R^{13}$ are both hydrogen or one of $R^{12}$ and $R^{13}$ is hydrogen and the other is methyl, $R^{11}$ is not phenyl or halophenyl; and a fungicidally-acceptable excipient.

24. A fungicidal composition of Claim 22 which comprises as active ingredient a compound of the formula

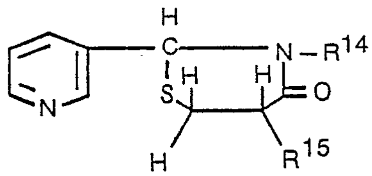

(V)

wherein

$R^{14}$ is $C_3$—$C_6$ alkyl, $C_5$—$C_6$ cycloalkyl, halobenzyl trifluoromethylphenyl, halophenyl, tolyl, or methoxyphenyl;

$R^{15}$ is hydrogen or methyl; and a fungicidally-acceptable excipient.

25. An aquatic growth regulator composition of Claim 22 which comprises as active ingredient a compound of the formula

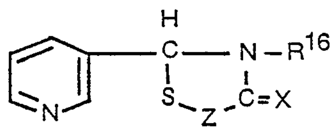

(VI)

wherein

$R^{16}$ is $C_3$—$C_{10}$ alkyl, $C_3$—$C_8$ cycloalkyl, methallyl, phenyl, halophenyl, trifluoromethylphenyl, methoxybenzyl, methylbenzyl, halobenzyl, benzyl, dimethylaminoethyl, $C_3$—$C_8$ cycloalkyl($C_1$—$C_3$)alkyl, methylcyclohexyl, 2-thiazolyl, $\alpha$-methylbenzyl, phenoxyphenyl, (tetrahydro-2-furanyl)methyl, haloanilyl, xylyl, trifluoromethylthiophenyl, methylthiophenyl, methoxyphenyl, fluoro($C_1$—$C_2$)alkoxyphenyl, 3,4-(methylenedioxy)benzyl biphenylyl, 2-norbornyl, furfuryl, 2-(1-methoxypropyl), halotolyl, or tolyl;

X is oxygen or sulfur;

Z is

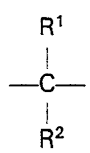

or

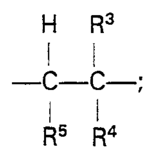

$R^1$ is hydrogen, methyl or —S($C_1$—$C_6$ alkyl);

$R^2$ is hydrogen, $C_1$—$C_6$ alkyl, or —S($C_1$—$C_6$ alkyl);

$R^3$ is hydrogen or methyl;

$R^4$ is hydrogen or $C_1$—$C_6$ alkyl;

$R^5$ is hydrogen or methyl; and

an aquatically-acceptable excipient.

26. A method for regulating the growth of submerged and floating aquatic weeds which comprises adding to the water containing said weeds an amount sufficient to provide a growth-regulating and non-herbicidal concentration of a compound of the formula

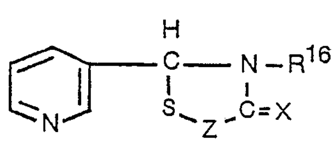

(VI)

wherein

$R^{16}$ is $C_3$—$C_{10}$ alkyl, $C_3$—$C_8$ cycloalkyl, methallyl, phenyl, halophenyl, trifluoromethylphenyl, methoxybenzyl, methylbenzyl, halobenzyl, benzyl, dimethylaminoethyl, methylcyclohexyl, $C_3$—$C_8$ cycloalkyl($C_1$—$C_3$)alkyl, 2-thiazolyl, $\alpha$-methylbenzyl, phenoxyphenyl, (tetrahydro-2-furanyl)methyl, haloanilyl, xylyl, trifluoromethylthiophenyl, methylthiophenyl, methoxyphenyl, fluoro($C_1$—$C_2$)alkoxyphenyl, 3,4-(methylenedioxy)benzyl biphenylyl, tolyl, 2-norbornyl, furfuryl, 2-(1-methoxypropyl), or halotolyl;

X is oxygen or sulfur;

Z is

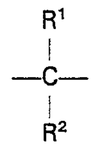 or 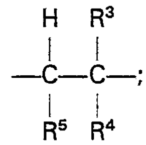;

$R^1$ is hydrogen, methyl or —S($C_1$—$C_6$ alkyl);

$R^2$ is hydrogen, $C_1$—$C_6$ alkyl, or —S($C_1$—$C_6$ alkyl);

$R^3$ is hydrogen or methyl;

$R^4$ is hydrogen or $C_1$—$C_6$ alkyl; and

$R^5$ is hydrogen or methyl.

27. The method of Claim 26 which comprises having the growth-regulating and non-herbicidal concentration of the active compounds range from 0.25 to 10 ppm.

28. A method of protecting plants from phytopathogenic fungi which comprises contacting the fungi with a fungicidally-effective and non-herbicidal amount of a compound of the formula

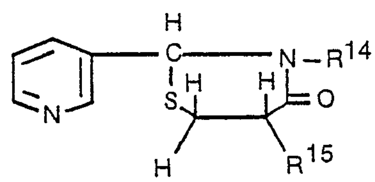

(V)

wherein

$R^{14}$ is $C_3$—$C_6$ alkyl, $C_5$—$C_6$ cycloalkyl, halobenzyl, trifluoromethylphenyl, halophenyl, tolyl, or methoxyphenyl; and

$R^{15}$ is hydrogen or methyl.

29. The method of Claim 28 which comprises having said compound applied at a rate within the range of from 5 to 1000 ppm.

30. A method of protecting plants from phytopathogenic fungi which comprises contacting the fungi with a fungicidally-effective and non-herbicidal amount of a compound of the formula

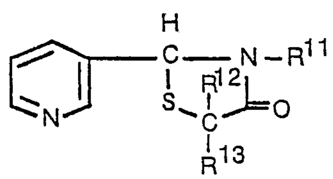

wherein

$R^{11}$ is $C_3$—$C_{10}$ alkyl, phenyl, halophenyl, methallyl, $C_3$—$C_8$ cycloalkyl, nitrophenyl, methylcyclohexyl, fluoro ($C_1$—$C_2$) alkoxyphenyl, tolyl, xylyl, methoxyphenyl, trifluoromethylphenyl, halotolyl, halobenzyl, 3,4-(methylenedioxy)benzyl or biphenylyl;

$R^{12}$ is hydrogen or methyl

$R^{13}$ is hydrogen or $C_1$—$C_6$ alkyl;

provided that when $R^{12}$ and $R^{13}$ are both hydrogen or one of $R^{12}$ and $R^{13}$ is hydrogen and the other is methyl, $R^{11}$ is not phenyl or halophenyl.

31. A method of protecting plants from phytopathogenic fungi according to claim 30 wherein the rate of application is within the range of from 25 to 1000 ppm.

**Patentansprüche**

1. Verbindung der Formel

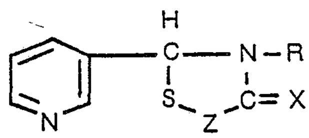 (I)

worin

R für $C_3$—$C_{10}$-Alkyl, $C_3$—$C_8$-Cycloalkyl, Methallyl, Phenyl, Halogenphenyl, Trifluormethylphenyl, Benzyl, Methoxybenzyl, Methylbenzyl, Halogenbenzyl, Dimethylaminoethyl, Methylcyclohexyl, $C_3$—$C_8$-Cycloalkyl-($C_1$—$C_3$)-alkyl, $\alpha$-Methylbenzyl, 2-Thiazolyl, Nitrophenyl, Phenoxyphenyl, (Tetrahydro-2-furanyl)methyl, Halogenanilyl, Trifluormethylthiophenyl, Methylthiophenyl, 2-Norbornyl, Furfuryl, 2-(1-Methoxypropyl), Methoxyphenyl, Fluor-($C_1$—$C_2$)-alkoxyphenyl, 3,4-(Methylendioxy)benzyl, Xylyl, Biphenylyl, Tolyl oder Halogentolyl steht,

X Sauerstoff oder Schwefel ist,

Z für

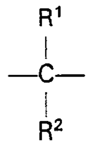 oder 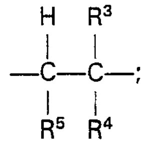;

steht,

$R^1$ Wasserstoff, Methyl oder —S—($C_1$—$C_6$-Alkyl) ist,

$R^2$ Wasserstoff, $C_1$—$C_6$-Alkyl oder —S—($C_1$—$C_6$-Alkyl) ist,

$R^3$ Wasserstoff oder Methyl ist,

$R^4$ Wasserstoff oder $C_1$—$C_6$-Alkyl ist, und

$R^5$ Wasserstoff oder Methyl ist,

mit der Maßgabe, daß R nicht Phenyl oder Halogenphenyl ist, falls X Sauerstoff ist und Z für

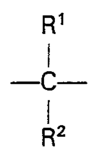

steht und $R^1$ und $R^2$ jeweils Wasserstoff sind oder einer der Substituenten $R^1$ und $R^2$ Wasserstoff ist und der andere Methyl ist.

2. Verbindung nach Anspruch 1 mit der Formel

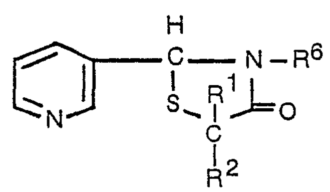 (II)

worin

$R^1$ Wasserstoff, Methyl oder —S—($C_1$—$C_6$-Alkyl) ist,

$R^2$ Wasserstoff, $C_1$—$C_6$-Alkyl oder —S—($C_1$—$C_6$-Alkyl) ist und

$R^6$ für $C_3$—$C_{10}$-Alkyl, $C_3$—$C_8$-Cycloalkyl, Methallyl, Halogenphenyl, Phenyl, Fluor-($C_1$—$C_2$)-alkoxyphenyl, Nitrophenyl, Tolyl, Methoxyphenyl, Furfuryl, 3,4-(Methylendioxy)benzyl, (Tetrahydro-2-furanyl)methyl, Trifluormethylphenyl, Methylcyclohexyl, $C_3$—$C_8$-Cycloalkyl-($C_1$—$C_3$)-alkyl, Biphenylyl, Phenoxyphenyl, 2-Norbornyl, Halogenbenzyl, 2-Thiazolyl, Trifluormethylthiophenyl, Halogentolyl oder Methylthiophenyl steht,

mit der Maßgabe, daß $R^6$ nicht Phenyl oder Halogenphenyl ist, falls $R^1$ und $R^2$ jeweils Wasserstoff sind oder einer der Substituenten $R^1$ und $R^2$ Wasserstoff ist und der andere Methyl ist.

3. Verbindung nach Anspruch 2, worin $R^6$ für $C_3$—$C_{10}$-Alkyl, $C_3$—$C_8$-Cycloalkyl, Methallyl, Furfuryl, 3,4-(Methylendioxy)benzyl, (Tetrahydro-2-furanyl)methyl, Methylcyclohexyl, $C_3$—$C_8$-Cycloalkyl-($C_1$—$C_3$)-alkyl, 2-Norbornyl, Halogenbenzyl oder 2-Thiazolyl steht.

4. Verbindung mit der Formel

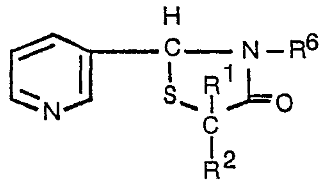

(II)

worin $R^1$ und $R^2$ wie in Anspruch 1 definiert sind, und $R^6$ für o-Chlorphenyl, p-Fluorphenyl, p-Bromphenyl, p-Iodphenyl, m-Chlorphenyl, o-Bromphenyl, o-Fluorphenyl, 2,4-Difluorphenyl, 2,5-Dichlorphenyl, 2,5-Dibromphenyl, 2-Brom-4-chlorphenyl, 2,4-Dibromphenyl, 3,4-Difluorphenyl, 4-Brom-2-chlorphenyl, 4-Brom-3-fluorphenyl, 3,4-Dichlorphenyl, 3,4-Dibromphenyl, 4-Chlor-3-fluorphenyl, 3,5-Difluorphenyl, 3,5-Dichlorphenyl, 3,5-Dibromphenyl, 2,3,4-Trichlorphenyl, 2,4,5-Trichlorphenyl oder 2,3,4,5-Tetrachlorphenyl steht.

5. Verbindung nach Anspruch 1 mit der Formel

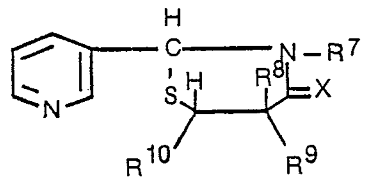

(III)

worin

X Sauerstoff oder Schwefel ist,

$R^7$ für $C_5$—$C_6$-Alkyl, $C_5$—$C_6$-Cycloalkyl, Halogenbenzyl, Xylyl, Halogenphenyl, Methylthiophenyl, Tolyl, Halogentolyl, Trifluormethylphenyl, 1-(2-Cyclopentyl-1-methyl)ethyl oder Methoxyphenyl steht,

$R^8$ Wasserstoff oder Methyl ist und

$R^9$ und $R^{10}$ gleich oder verschieden sind und Wasserstoff oder Methyl bedeuten.

6. 3-(4-Chlorphenyl)-5-methyl-2-(3-pyridyl)4-thiazolidinon.

7. 3-(4-Chlorbenzyl)-2-(3-pyridyl)-4-thiazolidinon.

8. 3-Cyclohexyl-5-methyl-2-(3-pyridyl)-4-thiazolidinon.

9. 3-(2-Cyclopentyl-1-methyl)ethyl-5-methyl-2-(3-pyridyl)-4-thiazolidinon.

10. 3-(4-Chlorphenyl)-5,5-dimethyl-2-(3-pyridyl)-4-thiazolidinon.

11. 3-(4-Chlorphenyl)-5-(n-butyl)-5-methyl-2-(3-pyridyl)-4-thiazolidinon.

12. 3-[(4-Chlorphenyl)methyl]tetrahydro-2-(3-pyridyl)-4H-1,3-thiazin-4-on.

13. 3-[(2-Cyclopentyl-1-methyl)ethyl]tetrahydro-2-(3-pyridyl)-4H-1,3-thiazin-4-on.

14. 3-(4-Chlorphenyl)tetrahydro-5-methyl-2-(3-pyridyl)-4H-1,3-thiazin-4-on.

15. 3-(3,4-Dimethylphenyl)tetrahydro-2-(3-pyridyl)-4H-1,3-thiazin-4-on.

16. Verfahren zur Herstellung oder 4-Thiazolidinonverbindungen der Formel

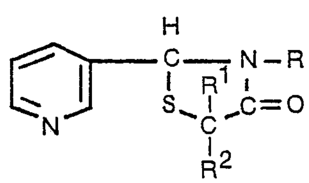

(VII)

worin R, $R^1$ und $R^2$ wie in Anspruch 1 definiert sind, mit der Maßgabe, daß wenigstens einer der Substituenten $R^1$ und $R^2$ etwas anderes als Wasserstoff ist und daß R nicht Phenyl oder Halogenphenyl ist, falls einer der Substituenten $R^1$ und $R^2$ Wasserstoff ist und der andere Methyl bedeutet, dadurch gekennzeichnet, daß man eine Verbindung der Formel (VII), worin $R^1$ oder $R^2$ Wasserstoff ist, mit einem Alkylierungsmittel umsetzt.

17. Verfahren zur Herstellung von Verbindungen der Formel

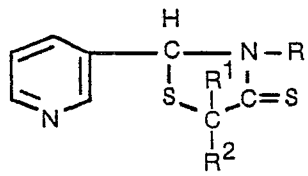

worin R, $R^1$ und $R^2$ wie in Anspruch 1 definiert sind, dadurch gekennzeichnet, daß man eine Verbindung der Formel

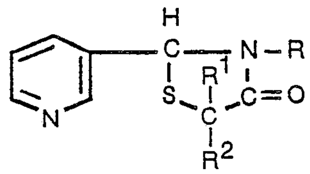

(VII)

mit $P_2S_5$ umsetzt.

18. Verfahren zur Herstellung der 4-Thiazolidinonverbindungen der Formel

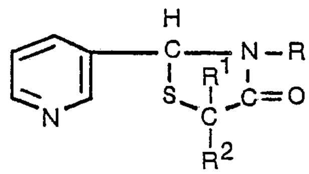

(VII)

worin R, $R^1$ und $R^2$ wie in Anspruch 1 definiert sind, mit der Maßgabe, daß R nicht Phenyl oder Halogenphenyl ist, falls $R^1$ und $R^2$ jeweils Wasserstoff sind oder einer der Substituenten $R^1$ und $R^2$ Wasserstoff ist und der andere Methyl ist, dadurch gekennzeichnet, daß man 3-Pyridylcarboxaldehyd der Formel

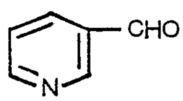

mit einem substituenten Amin der Formel

$$R—NH_2,$$

worin R wie in Anspruch 1 definiert ist und $R—NH_2$ ein sterisch gehindertes Amin darstellt, in Gegenwart eines Cyclisierungsmittels umsetzt und das Ganze dann mit Thioglykolsäure oder Thiomilchsäure zur Reaktion bringt.

19. Verfahren zur Herstellung der Thiazinonverbindungen der Formel

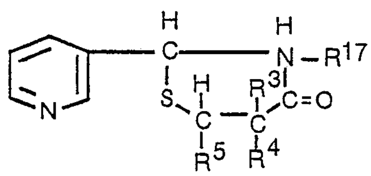

(VIII)

worin $R^3$, $R^4$ und $R^5$ wie in Anspruch 1 definiert sind und $R^{17}$ für $C_3$—$C_{10}$-Alkyl, $C_5$—$C_6$-Cycloalkyl, $C_3$—$C_8$-Cycloalkyl-($C_1$—$C_3$)-alkyl, Halogenphenyl, Trifluormethylphenyl, Halogenbenzyl, Halogenanilyl, Methoxyphenyl, Xylyl, Tolyl oder Methylthiophenyl steht, dadurch gekennzeichnet, daß man eine Verbindung der Formel

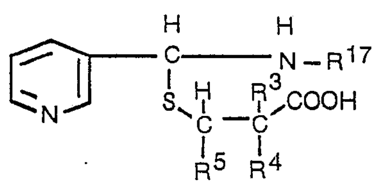

worin $R^3$, $R^4$, $R^5$ und $R^{17}$ wie oben definiert sind, mit einem Cyclisierungsmittel umsetzt.

20. Verfahren nach Anspruch 19, dadurch gekennzeichnet, daß man die Verbindungen der Formel (VIII), falls $R^3$ oder $R^4$ Wasserstoff ist, oder falls $R^3$ Methyl ist und $R^4$ für $C_1$—$C_6$-Alkyl steht und $R^5$ Wasserstoff ist, mit einem Alkylierungsmittel umsetzt und so die Verbindungen der Formel (VIII) bildet, worin entweder $R^3$ Methyl ist oder $R^4$ für $C_1$—$C_6$-Alkyl steht, oder worin $R^3$ Methyl ist und $R^4$ für $C_1$—$C_6$-Alkyl steht und $R^5$ dann Methyl ist.

21. Verfahren nach Anspruch 19, dadurch gekennzeichnet, daß man die Verbindungen der Formel (VIII) mit $P_2S_5$ umsetzt und so die Verbindungen der Formel (I) wie in Anspruch 1 definiert bildet, worin X Schwefel ist.

22. Zusammensetzung zur Anwendung in der Landwirtschaft, dadurch gekennzeichnet, daß sie

eine Verbindung der Formel (I) wie in Anspruch 1 definiert als Wirkstoff und einen landwirtschaftlich annehmbaren Hilfsstoff enthält.

23. Fungizide Zusammensetzung nach Anspruch 22, dadurch gekennzeichnet, daß sie eine Verbindung der Formel

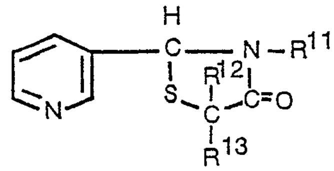

(IV)

worin

$R^{11}$ für $C_3$—$C_{10}$-Alkyl, Phenyl, Halogenphenyl, Methallyl, $C_3$—$C_8$-Cycloalkyl, Nitrophenyl, Methylcyclohexyl, Fluor-($C_1$—$C_2$)-alkoxyphenyl, Tolyl, Xylyl, Methoxyphenyl, Trifluormethylphenyl, Halogentolyl, Halogenbenzyl, 3,4-(Methylendioxy)phenyl oder Biphenylyl steht,

$R^{12}$ Wasserstoff oder Methyl ist und

$R^{13}$ Wasserstoff oder $C_1$—$C_6$-Alkyl ist,

mit der Maßgabe, daß $R^{11}$ nicht Phenyl oder Halogenphenyl ist, falls $R^{12}$ und $R^{13}$ jeweils Wasserstoff sind oder einer der Substituenten $R^{12}$ und $R^{13}$ Wasserstoff ist und der andere Methyl bedeutet, als Wirkstoff und einen fungizid annehmbaren Hilfsstoff enthält.

24. Fungizide Zusammensetzung nach Anspruch 22, dadurch gekennzeichnet, daß sie eine Verbindung der Formel

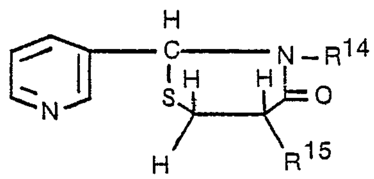

(V)

worin

$R^{14}$ für $C_3$—$C_6$-Alkyl, $C_5$—$C_6$-Cycloalkyl, Halogenbenzyl, Trifluormethylphenyl, Halogenphenyl, Tolyl oder Methoxyphenyl steht und

$R^{15}$ Wasserstoff oder Methyl ist,

als Wirkstoff und einen fungizid annehmbaren Hilfsstoff enthält.

25. Zusammensetzung nach Anspruch 22 zur Regulierung des Wachstums von Wasserpflanzen, dadurch gekennzeichnet, daß sie eine Verbindung der Formel

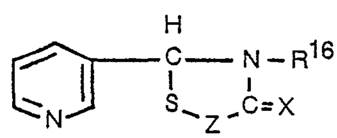

(VI)

worin

$R^{16}$ für $C_3$—$C_{10}$-Alkyl, $C_3$—$C_8$-Cycloalkyl, Methallyl, Phenyl, Halogenphenyl, Trifluormethylphenyl, Methoxybenzyl, Methylbenzyl, Halogenbenzyl, Benzyl, Dimethylaminoethyl, $C_3$—$C_8$-Cycloalkyl-($C_1$—$C_3$)-alkyl, Methylcyclohexyl, 2-Thiazolyl, $\alpha$-Methylbenzyl, Phenoxyphenyl, (Tetrahydro-2-furanyl)-methyl, Halogenanilyl, Xylyl, Trifluormethylthiophenyl, Methylthiophenyl, Methoxyphenyl, Fluor-($C_1$—$C_2$)-alkoxyphenyl, 3,4-(Methylendioxy)benzyl, Biphenylyl, 2-Norbornyl, Furfuryl, 2-(1-Methoxypropyl), Halogentolyl oder Tolyl steht,

X Sauerstoff oder Schwefel ist,

Z für

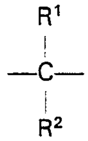

oder

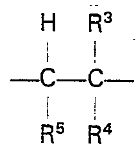

steht,

$R^1$ Wasserstoff, Methyl oder —S—($C_1$—$C_6$-Alkyl) ist,

$R^2$ Wasserstoff, $C_1$—$C_6$-Alkyl oder —S—($C_1$—$C_6$-Alkyl) ist,

$R^3$ Wasserstoff oder Methyl ist,

$R^4$ Wasserstoff oder $C_1$—$C_6$-Alkyl ist und

$R^5$ Wasserstoff oder Methyl ist, als Wirkstoff und einen in Wasser annehmbaren Hilfsstoff enthält.

26. Verfahren zur Regulierung der Wachstums von unter Wasser befindlichen oder auf dem Wasser schwimmenden Wasserunkräutern, dadurch gekennzeichnet, daß man das solche Umkräuter enthaltende Wasser mit einer zur Bildung einer wachstumsregulierenden und nichtherbiziden Konzentration ausreichenden Menge einer Verbindung der Formel

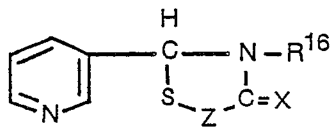

(VI)

versetzt, worin

$R^{16}$ $C_3$—$C_{10}$-Alkyl, $C_3$—$C_8$-Cycloalkyl, Methallyl, Phenyl, Halogenphenyl, Trifluormethylphenyl, Methoxybenzyl, Methylbenzyl, Halogenbenzyl, Benzyl, Dimethylaminoethyl, Methylcyclohexyl, $C_3$—$C_8$-Cycloalkyl-($C_1$—$C_3$)-alkyl, 2-Thiazolyl, $\alpha$-Methylbenzyl, Phenoxyphenyl, (Tetrahydro-2-furanyl)methyl, Halogenanilyl, Xylyl, Trifluormethylthiophenyl, Methylthiophenyl, Methoxyphenyl, Fluor-($C_1$—$C_2$)-alkoxyphenyl, 3,4-(Methylendioxy)benzyl, Biphenylyl, Tolyl, 2-Norbornyl, Furfuryl, 2-(1-Methoxypropyl) oder Halogentolyl ist,

X Sauerstoff oder Schwefel ist,

Z für

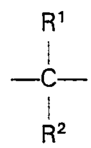

oder

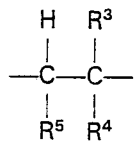

steht,

$R^1$ Wasserstoff, Methyl oder —S—($C_1$—$C_6$-Alkyl) ist,

$R^2$ Wasserstoff, $C_1$—$C_6$-Alkyl oder —S—($C_1$—$C_6$-Alkyl) ist,

$R^3$ Wasserstoff oder Methyl ist,

$R^4$ Wasserstoff oder $C_1$—$C_6$-Alkyl ist und

$R^5$ Wasserstoff oder Methyl ist.

27. Verfahren nach Anspruch 26, dadurch gekennzeichnet, daß die wachstumsregulierende und nichtherbizide Konzentration des Wirkstoffs von 0,25 bis 10 ppm reicht.

28. Verfahren zum Schutz von Pflanzen vor phytopathogenen Pilzen, dadurch gekennzeichnet, daß man die Pilze mit einer fungizid wirksamen und nichtherbiziden Menge einer Verbindung der Formel

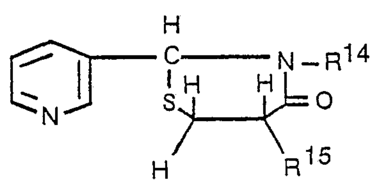

(V)

behandelt, worin

$R^{14}$ für $C_3$—$C_6$-Alkyl, $C_5$—$C_6$-Cycloalkyl, Halogenbenzyl, Trifluormethylphenyl, Halogenphenyl, Tolyl oder Methoxyphenyl steht und

$R^{15}$ Wasserstoff oder Methyl ist.

29. Verfahren nach Anspruch 28, dadurch gekennzeichnet, daß man die Verbindung in einer Menge im Bereich von 5 bis 1000 ppm anwendet.

30. Verfahren zum Schutz von Pflanzen vor phytopathogenen Pilzen, dadurch gekennzeichnet, daß man die Pilze mit einer fungizid wirksamen und nichtherbiziden Menge einer Verbindung der Formel

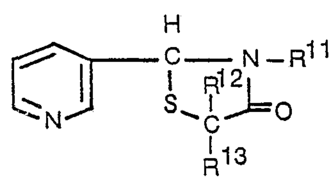

(IV)

behandelt, worin

$R^{11}$ für $C_3$—$C_{10}$-Alkyl, Phenyl, Halogenphenyl, Methallyl, $C_3$—$C_8$-Cycloalkyl, Nitrophenyl, Methylcyclohexyl, Fluor-($C_1$—$C_2$)-alkoxyphenyl, Tolyl, Xylyl, Methoxyphenyl, Trifluormethylphenyl, Halogentolyl, Halogenbenzyl, 3,4-(Methylendioxy)benzyl oder Biphenylyl steht,

$R^{12}$ Wasserstoff oder Methyl ist und

$R^{13}$ Wasserstoff oder $C_1$—$C_6$-Alkyl ist,

mit der Maßgabe, daß $R^{11}$ nicht Phenyl oder Halogenphenyl ist, falls $R^{12}$ und $R^{13}$ jeweils Wasserstoff sind oder einer der Substituenten $R^{12}$ und $R^{13}$ Wasserstoff ist und der andere Methyl bedeutet.

31. Verfahren zum Schutz von Pflanzen vor phytopathogenen Pilzen nach Anspruch 30, dadurch gekennzeichnet, daß man den Wirkstoff in einer Menge im Bereich von 25 bis 1000 ppm anwendet.

## Revendications

1. Composé de formule:

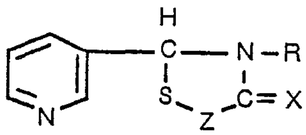

(I)

dans laquelle

R représente un groupe alkyle en $C_3$—$C_{10}$, un groupe cycloalkyle en $C_3$—$C_8$, un groupe méthallyle, un groupe phényle, un groupe halophényle, un groupe trifluorométhylphényle, un groupe benzyle, un groupe méthoxybenzyle, un groupe méthylbenzyle, un groupe halobenzyle, un groupe diméthylaminoéthyle, un groupe méthylcyclohexyle, un groupe cycloalkyl(en $C_3$—$C_8$)alkyle (en $C_1$—$C_3$), un groupe $\alpha$-méthylbenzyle, un groupe 2-thiazolyle, un groupe nitrophényle, un groupe phénoxyphényle, un groupe (tétrahydro-2-furanyl)méthyle, un groupe halo-anilyle, un groupe trifluorométhylthiophényle, un groupe méthylthiophényle, un groupe 2-norbornyle, un groupe furfuryle, un groupe 2-(1-méthoxypropyle), un groupe méthoxyphényle, un groupe fluoro-alcoxy(en $C_1$—$C_2$)phényle, un groupe 3,4-(méthylène-dioxy)-benzyle, un groupe xylyle, un groupe biphénylyle, un groupe tolyle ou un groupe halotolyle;

X représente un atome d'oxygen ou de soufre;

Z représente

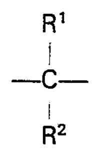 ou 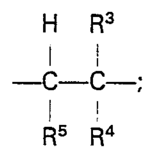 ;

$R^1$ représente un atome d'hydrogène, un groupe méthyle ou un groupe —S(alkyle en $C_1$—$C_6$);

$R^2$ représente un atome d'hydrogène, un groupe alkyle en $C_1$—$C_6$ ou un groupe —S(alkyle en $C_1$—$C_6$);

$R^3$ représente un atome d'hydrogène ou un groupe méthyle;

$R^4$ représente un atome d'hydrogène ou un groupe alkyle en $C_1$—$C_6$; et

$R^5$ représente un atome d'hydrogène ou un groupe méthyle;

avec cette réserve que, lorsque X est un atome d'oxygène, que Z représente

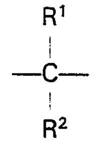

et que $R^1$ et $R^2$ représentent tous deux un atome d'hydrogène ou que l'un des radicaux $R^1$ et $R^2$ représente un atome d'hydrogène et que l'autre représente un groupe méthyle, R n'est ni un groupe phényle, ni un groupe halophényle.

2. Composé suivant la revendication 1 de formule:

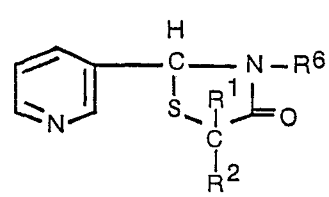

(II)

dans laquelle

$R^1$ représente un atome d'hydrogène, un groupe méthyle ou un groupe —S(alkyle en $C_1$—$C_6$);

$R^2$ représente un atome d'hydrogène, un groupe alkyle en $C_1$—$C_6$ ou un groupe —S(alkyle en $C_1$—$C_6$); et

$R^6$ représente un groupe alkyle en $C_3$—$C_{10}$, un groupe cycloalkyle en $C_3$—$C_8$, un groupe méthallyle, un groupe halophényle, un groupe phényle, un groupe fluoro-alcoxy(en $C_1$—$C_2$)phényle, un groupe nitrophényle, un groupe tolyle, un groupe méthoxyphényle, un groupe furfuryle, un groupe 3,4-(méthylène-dioxy)benzyle, un groupe (tétrahydro-2-furanyl)méthyle, un groupe trifluorométhylphényle, un groupe méthylcyclohexyle, un groupe cyclo-alkyl(en $C_3$—$C_8$)alkyle(en $C_1$—$C_3$), un groupe biphénylyle, un groupe phénoxyphényle, un groupe 2-norbornyle, un groupe halobenzyle, un groupe 2-thiazolyle, un groupe trifluorométhylthiophényle, un groupe halotolyle ou un groupe méthylthiophényle, avec cette réserve que, lorsque $R^1$ et $R^2$ représentent tous deux un atome d'hydrogène ou qu'un des radicaux $R^1$ et $R^2$ représente un atome d'hydrogène et l'autre, un groupe méthyle, $R^6$ n'est ni un groupe phényle, ni un groupe halophényle.

3. Composé suivant la revendication 2, caractérisé en ce que $R^6$ est un groupe alkyle en $C_3$—$C_{10}$, un groupe cycloalkyle en $C_3$—$C_8$, un groupe méthallyle, un groupe furfuryle, un groupe 3,4-(méthylène-dioxy)benzyle, un groupe (tétrahydro-2-furanyl)méthyle, un groupe méthylcyclohexyle, un groupe cyclo-alkyl(en $C_3$—$C_8$)alkyle (en $C_1$—$C_3$), un groupe 2-norbornyle, un groupe halobenzyle ou un groupe 2-thiazolyle.

4. Composé de formule:

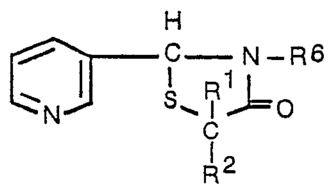

(II)

dans laquelle $R^1$ et $R^2$ ont les significations définies dans la revendication 1 et $R^6$ représente un groupe *o*-chlorophényle, un groupe *p*-fluorophényle, un groupe *p*-bromophényle, un groupe *p*-iodophényle, un groupe *m*-chlorophényle, un groupe *o*-bromophényle, un groupe *o*-fluorophényle, un groupe 2,4-difluorophényle, un groupe 2,5-dichlorophényl-2,5-dibromophényle, un groupe 2-bromo-4-chlorophényle, un groupe 2,4-dibromophényle, un groupe 3,4-difluorophényle, un groupe 4-bromo-2-chlorophényle, un groupe 4-bromo-3-fluorophényle, un groupe 3,4-dichlorophényle, un groupe 3,4-dibromophényle, un groupe 4-chloro-3-fluorophényle, un groupe 3,5-difluorophényle, un groupe 3,5-dichlorophényle, un groupe 3,5-dibromophényle, un groupe 2,3,4-trichlorophényle, un groupe 2,4,5-trichlorophényle ou un groupe 2,3,4,5-tétrachlorophényle.

5. Composé suivant la revendication 1 de formule:

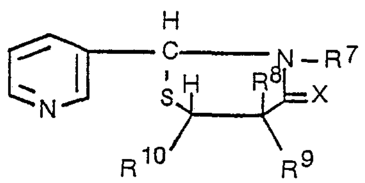

(III)

dans laquelle

X représente un atome d'oxygène ou de soufre;

$R^7$ représente un groupe alkyle en $C_5$—$C_6$, un groupe cycloalkyle en $C_5$—$C_6$, un groupe halobenzyle, un groupe xylyle, un groupe halophényle, un groupe méthylthiophényle, un groupe tolyle, un groupe halotolyle, un groupe trifluorométhylphényle, un groupe 1-(2-cyclopentyl-1-méthyl)-éthyle ou un groupe méthoxyphényle;

$R^8$ représente un atome d'hydrogène ou un groupe méthyle; et

$R^9$ et $R^{10}$ sont identiques ou différents et représentent chacun un atome d'hydrogène ou un groupe méthyle.

6. La 3-(4-chlorophényl)-5-méthyl-2-(3-pyridyl)-4-thiazolidinone.

7. La 3-(4-chlorobenzyl)-2-(3-pyridyl)-4-thiazolidinone.

8. La 3-cyclohexyl-5-méthyl-2-(3-pyridyl)-4-thiazolidinone.

9. La 3-(2-cyclopentyl-1-méthyl)éthyl-5-méthyl-2-(3-pyridyl)-4-thiazolidinone.

10. La 3-(4-chlorophényl)-5,5-diméthyl-2-(3-pyridyl)-4-thiazolidinone.

11. La 3-(4-chlorophényl)-5-(*n*-butyl)-5-méthyl-2-(3-pyridyl)-4-thiazolidinone.

12. La 3-[(4-chlorophényl)méthyl]tètrahydro-2-(3-pyridyl)-4H-1,3-thiazin-4-one.

13. La 3-[(2-cyclopentyl-1-méthyl)-éthyl]tétrahydro-2-(3-pyridyl)-4H-1,3-thiazin-4-one.

14. La 3-(4-chlorophényl)-tétrahydro-5-méthyl-2-(3-pyridyl)-4H-1,3-thiazin-4-one.

15. La 3-(3,4-diméthylphényl)tétrahydro-2-(3-pyridyl)-4H-1,3-thiazin-4-one.

16. Procédé de préparation des composés de 4-thiazolidinone de formule:

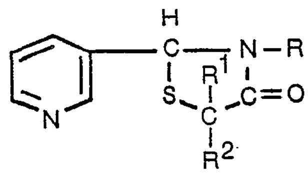

(VII)

dans laquelle R, $R^1$ et $R^2$ ont les significations définies dans la revendication 1, avec cette réserve qu'au moins un des radicaux $R^1$ et $R^2$ est différent de l'hydrogène et que, lorsqu'un des radicaux $R^1$ et $R^2$ est un atome d'hydrogène et que l'autre est un groupe méthyle, R n'est ni un groupe phényle, ni un groupe halophényle, caractérisé en ce qu'il consiste à faire réagir un composé de formule (VII) dans laquelle $R^1$ ou $R^2$ est un atome d'hydrogène, avec un agent d'alkylation.

17. Procédé de préparation de composés de formule:

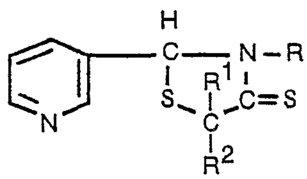

dans laquelle R, $R^1$ et $R^2$ ont les significations définies dans la revendication 1, caractérisé en ce qu'il consiste à faire réagir un composé de formule:

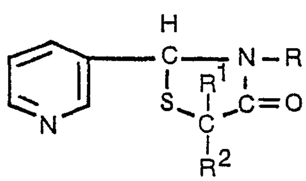

(VII)

avec $P_2S_5$.

18. Procédé de préparation des composés de 4-thiazolidinone de formule:

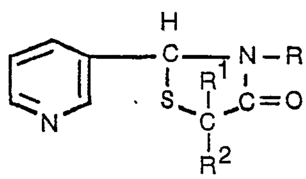

(VII)

dans laquelle R, $R^1$ et $R^2$ ont les significations définies dans la revendication 1, avec cette réserve que, lorsque $R^1$ et $R^2$ représentent tous deux un atome d'hydrogène ou qu'un des radicaux $R^1$ et $R^2$ représente un atome d'hydrogène et l'autre, un groupe méthyle, R n'est ni un groupe phényle, ni un groupe halophényle, caractérisé en ce qu'il consiste à faire réagir le 3-pyridylcarboxaldéhyde de formule:

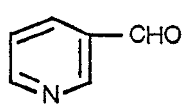

avec un amine substituée de formule:

$R—NH_2$

dans laquelle R a la signification définie dans la revendication 1 et $R—NH_2$ est une amine à empêchement stérique, en présence d'un agent de cyclisation, puis faire réagir avec l'acide thioglycolique ou l'acide thiolactique.

19. Procédé de préparation des composés de thiazinone de formule:

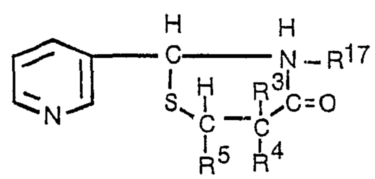

(VIII)

dans laquelle

$R^3$, $R^4$ et $R^5$ ont les significations définies dans la revendication 1,

$R^{17}$ représente un groupe alkyle en $C_3$—$C_{10}$, un groupe cycloalkyle en $C_5$—$C_6$, un groupe cycloalkyl(en $C_3$—$C_8$)alkyle(en $C_1$—$C_3$), un groupe halophényle, un groupe trifluorométhylphényle, un groupe halobenzyle, un groupe halo-anilyle, un groupe méthoxyphényle, un groupe xylyle, un groupe tolyle ou un groupe méthylthiophényle, caractérisé en ce qu'il consiste à faire réagir un composé de formule:

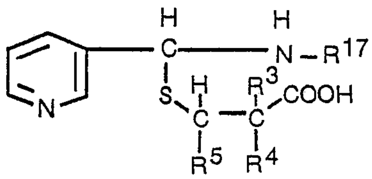

dans laquelle $R^3$, $R^4$, $R^5$ et $R^{17}$ ont les significations définies ci-dessus, avec un agent de cyclisation.

20. Procédé suivant la revendication 19, caractérisé en ce qu'il consiste également à faire réagir les composés de formule (VIII) lorsque $R^3$ ou $R^4$ est un atome d'hydrogène ou lorsque $R^3$ est un groupe méthyle, que $R^4$ est un groupe alkyle en $C_1$—$C_6$ et que $R^5$ est un atome d'hydrogène, avec un agent d'alkylation pour obtenir les composés de formule (VIII) dans laquelle $R^3$ représente un groupe méthyle ou $R^4$ représente un groupe alkyle en $C_1$—$C_6$, ou dans laquelle $R^3$ représente un groupe méthyle et $R^4$ représente un groupe alkyle en $C_1$—$C_6$, $R^5$ étant alors un groupe méthyle.

21. Procédé suivant la revendication 19, caractérisé en ce qu'il consiste également à faire réagir les composés de formule (VIII) avec $P_2S_5$ pour obtenir les composés de formule (I) tels que définis dans la revendication 1 dans lesquels X représente un atome de soufre.

22. Composition destinée à être utilisée en agriculture, caractérisée en ce que, comme ingrédient actif, elle comprend un composé de formule (I) tel que défini dans la revendication 1, ainsi qu'un excipient acceptable du point de vue agricule.

23. Composition fongicide suivant la revendication 22, caractérisée en ce que, comme ingrédient actif, elle comprend un composé de formule:

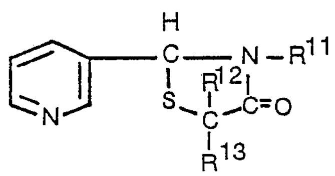

(IV)

dans laquelle

$R^{11}$ représente un groupe alkyle en $C_3$—$C_{10}$, un groupe phényle, un groupe halophényle, un groupe méthallyle, un groupe cycloalkyle en $C_3$—$C_8$, un groupe nitrophényle, un groupe méthylcyclohexyle, un groupe fluoro-alcoxy(en $C_1$—$C_2$)phényle, un groupe tolyle, un groupe xylyle, un groupe méthoxyphényle, un groupe trifluorométhylphényle, un groupe halotolyle, un groupe halobenzyle, un groupe 3,4-(méthylène-dioxy)phényle ou un groupe biphénylyle;

$R^{12}$ représente un atome d'hydrogène ou un groupe méthyle;

$R^{13}$ représente un atome d'hydrogène ou un groupe alkyle en $C_1$—$C_6$,

avec cette réserve que, lorsque $R^{12}$ et $R^{13}$ représentent tous deux un atome d'hydrogène ou qu'un des radicaux $R^{12}$ et $R^{13}$ représente un atome d'hydrogène et l'autre, un groupe méthyle, $R^{11}$ n'est ni un groupe phényle ni un groupe halophényle; ainsi qu'un excipient acceptable du point de vue fongicide.

24. Composition fongicide suivant la revendication 22, caractérisée en ce que, comme ingrédient actif, elle comprend un composé de formule:

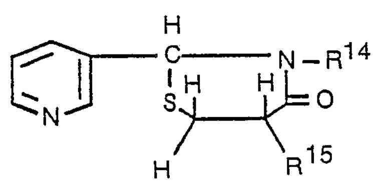

(V)

dans laquelle

$R^{14}$ représente un groupe alkyle en $C_3$—$C_6$, un groupe cycloalkyle en $C_5$—$C_6$, un groupe halobenzyle, un groupe trifluorométhylphényle, un groupe halophényle, un groupe tolyle ou un groupe méthoxyphényle;

$R^{15}$ représente un atome d'hydrogène ou un groupe méthyle;

ainsi qu'un excipient acceptable du point de vue fongicide.

25. Composition régulatrice de la croissance aquatique suivant la revendication 22, caractérisée en ce que, comme ingrédient actif, elle comprend un composé de formule:

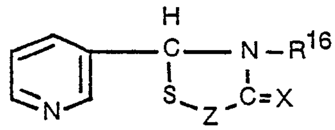

(VI)

dans laquelle

$R^{16}$ représente un groupe alkyle en $C_3$—$C_{10}$, un groupe cycloalkyle en $C_3$—$C_8$, un groupe méthallyle, un groupe phényle, un groupe halophényle, un groupe trifluorométhylphényle, un groupe méthoxybenzyle, un groupe méthylbenzyle, un groupe halobenzyle, un groupe benzyle, un groupe diméthylaminoéthyle, un groupe cycloalkyl(en $C_3$—$C_8$)alkyle(en $C_1$—$C_3$), un groupe méthylcyclohexyle, un groupe 2-thiazolyle, un groupe $\alpha$-méthylbenzyle, un groupe phénoxyphényle, un groupe (tétrahydro-2-furanyl)méthyle, un groupe haloanilyle, un groupe xylyle, un groupe trifluorométhylthiophényle, un groupe méthylthiophényle, un groupe méthoxyphényle, un groupe fluoro-alcoxy(en $C_1$—$C_2$)phényle, un groupe 3,4-(méthylène-dioxy)benzyle, un groupe biphénylyle, un groupe 2-norbornyle, un groupe furfuryle, un groupe 2-(1-méthoxypropyle), un groupe halotolyle ou un groupe tolyle;

X représente un atome d'oxygène ou de soufre;

Z représente

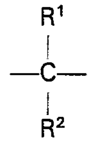

ou

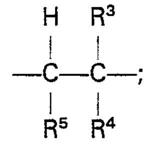

;

$R^1$ représente un atome d'hydrogène, un groupe méthyle ou un groupe —S(alkyle en $C_1$—$C_6$);

$R^2$ représente un atome d'hydrogène, un groupe alkyle en $C_1$—$C_6$ ou un groupe —S(alkyle en $C_1$—$C_6$);

$R^3$ représente un atome d'hydrogène ou un groupe méthyle;

$R^4$ représente un atome d'hydrogène ou un groupe alkyle en $C_1$—$C_6$;

$R^5$ représente un atome d'hydrogène ou un groupe méthyle;

ainsi qu'un excipient acceptable du point de vue aquatique.

26. Procédé de régulation de la croissance des herbes aquatiques submergées et flottantes, caractérisé en ce qu'il consiste à ajouter, à l'eau contenant ces herbes, en une quantité suffisante pour obtenir une concentration non herbicide et régulatrice de croissance, un composé de formule:

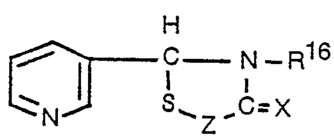

(VI)

dans laquelle

$R^{16}$ représente un groupe alkyle en $C_3$—$C_{10}$, un groupe cycloalkyle en $C_3$—$C_8$, un groupe méthallyle, un groupe phényle, un groupe halophényle, un groupe trifluorométhylphényle, un groupe méthoxybenzyle, un groupe méthylbenzyle, un groupe halobenzyle, un groupe benzyle, un groupe diméthylaminoéthyle, un groupe méthylcyclohexyle, un groupe cycloalkyl(en $C_3$—$C_8$)alkyle(en $C_1$—$C_3$), un groupe 2-thiazolyle, un groupe $\alpha$-méthylbenzyle, un groupe phénoxyphényle, un groupe (tétrahydro-2-furanyl)méthyle, un groupe haloanilyle, un groupe xylyle, un groupe trifluorométhylthiophényle, un groupe méthylthiophényle, un groupe méthoxyphényle, un groupe fluoro-alcoxy(en $C_1$—$C_2$)phényle, un groupe 3,4-(méthylène-dioxy)benzyle, un groupe biphénylyle, un groupe tolyle, un groupe 2-norbornyle, un groupe furfuryle, un groupe 2-(1-méthoxypropyle) ou un groupe halotolyle;

X représente un atome d'oxygène ou de soufre;

Z représente

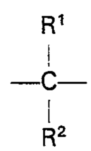

ou

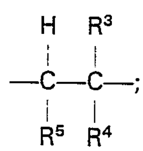

;

$R^1$ représente un atome d'hydrogène, un groupe méthyle ou un groupe —S(alkyle en $C_1$—$C_6$);

$R^2$ représente un atome d'hydrogène, un groupe alkyle en $C_1$—$C_6$ ou un groupe —S(alkyle en $C_1$—$C_6$);

$R^3$ représente un atome d'hydrogène ou un groupe méthyle;

$R^4$ représente un atome d'hydrogène ou un groupe alkyle en $C_1$—$C_6$; et

$R^5$ représente un atome d'hydrogène ou un groupe méthyle.

27. Procédé suivant la revendication 26, caractérisé en ce que la concentration non herbicide et régulatrice de croissance des composés actifs se situe entre 0,25 et 10 parties par million.

28. Procédé en vue de protéger les plantes contre les champignons phytopathogènes, caractérisé en ce qu'il consiste à mettre les champignons en contact avec une quantité non herbicide et efficace du point de vue fongicide d'un composé de formule:

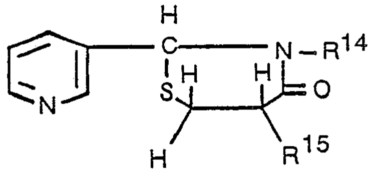

(V)

dans laquelle

$R^{14}$ représente un groupe alkyle en $C_3$—$C_6$, un groupe cycloalkyle en $C_5$—$C_6$, un groupe halobenzyle, un groupe trifluorométhylphényle, un groupe halophényle, un groupe tolyle ou un groupe méthoxyphényle; et

$R^{15}$ représente un atome d'hydrogène ou un groupe méthyle.

29. Procédé suivant la revendication 28, caractérisé en ce que ce composé est appliqué à raison de 5 à 1.000 parties par million.

30. Procédé en vue de protéger les plantes contre les champignons phytopathogènes, caractérisé en ce qu'il consiste à mettre les champignons en contact avec une quantité non herbicide et efficace du point de vue fongicide d'un composé de formule:

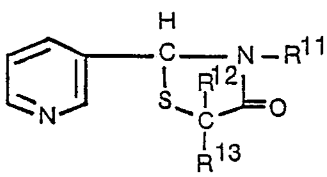

dans laquelle $R^{11}$ représente un groupe alkyle en $C_3$—$C_{10}$, un groupe phényle, un groupe halophényle, un groupe méthallyle, un groupe cycloalkyle en $C_3$—$C_8$, un groupe nitrophényle, un groupe méthylcyclohexyle, un groupe fluoro-alcoxy(en $C_1$—$C_2$)phényle, un groupe tolyle, un groupe xylyle, un groupe méthoxyphényle, un groupe trifluorométhylphényle, un groupe halotolyle, un groupe halobenzyle, un groupe 3,4-(méthylène-dioxy)benzyle, ou un groupe biphénylyle;

$R^{12}$ représente un atome d'hydrogène ou un groupe méthyle;

$R^{13}$ représente un atome d'hydrogène ou un groupe alkyle en $C_1$—$C_6$;

avec cette réserve que, lorsque $R^{12}$ et $R^{13}$ représentent tous deux un atome d'hydrogène ou qu'un des radicaux $R^{12}$ et $R^{13}$ représente un atome d'hydrogène et l'autre, un groupe méthyle, $R^{11}$ n'est ni un groupe phényle, ni un groupe halophényle.

31. Procédé en vue de protéger les plantes contre les champignons phytopathogènes suivant la revendication 30, caractérisé en ce que le taux d'application se situe dans l'intervalle allant de 25 à 1.000 parties par million.